# EUROPEAN PATENT APPLICATION

(11) **EP 4 586 119 A1**
(43) Date of publication of application: **16.07.2025**
(21) Application number: 25150140.9
(22) Date of filing: 03.01.2025
(51) Int. Cl.: G06F 21/57, G06F 8/654

(54) **STORAGE DEVICE SHARED BY A PLURALITY OF ZONAL CONTROL UNITS AND OPERATING METHOD THEREOF**

(30) Priority: 09.01.2024 KR 20240003636
(71) Applicant: Samsung Electronics Co., Ltd., Suwon-si, Gyeonggi-do 16677 (KR)
(72) Inventor: LEE, Jinwook, 16677 Suwon-si, Gyeonggi-do (KR)
(74) Representative: Kuhnen & Wacker Patent- und Rechtsanwaltsbüro PartG mbB

(57) **Abstract**

A storage device (120) includes a memory device comprising a memory cell array; and a memory controller (121) configured to: receive a plurality of pieces of firmware data from a plurality of zonal control units (110); classify plurality of pieces of firmware data into a plurality of data groups based on tags indicating whether the plurality of pieces of firmware data are executable firmware-related codes; and store the plurality of data groups in the memory cell array.

## Description

### BACKGROUND

Apparatuses and methods consistent with embodiments of the present disclosure relate to a storage device, and more particularly, to a storage device providing memory space required for operation of a plurality of zonal control units (ZCUs), and an operating method thereof.

Autonomous driving technology involves recognizing a surrounding environment and controlling a vehicle by determining a driving situation to drive the vehicle to a given destination without driver intervention. Autonomous vehicles may drive to a destination on its own by preventing collisions with obstacles in a driving route through a plurality of mounted ZCUs and controlling a speed and driving direction according to the shape of the road. A ZCU is a device that integrates and controls vehicle functions in a physical zone adjacent to a plurality of sensors and a plurality of actuators of an autonomous vehicle.

A plurality of ZCUs mounted on an autonomous vehicle may execute a plurality of pieces of firmware data to control the adjacent sensors and the actuators. In addition, a plurality of pieces of firmware data may require rollback due to errors occurring due to updates. In order to support smooth control operations of a plurality of ZCUs, there is a need for a storage device that effectively supports management of the plurality of pieces of firmware data, including their updates and rollbacks.

### SUMMARY

One or more example embodiments provide a storage device for effectively managing a plurality of pieces of firmware data executed in a plurality of ZCUs to support highly reliable autonomous driving technology, and an operating method of the storage device.

According to an aspect of the present disclosure, a storage device may include: a memory device including a memory cell array; and a memory controller configured to: receive a plurality of pieces of firmware data from a plurality of zonal control units (ZCUs); classify plurality of pieces of firmware data into a plurality of data groups based on tags indicating whether the plurality of pieces of firmware data are executable firmware-related codes; and store the plurality of data groups in the memory cell array.

According to another aspect of the present disclosure, a storage device may include: a memory device configured to store a data group including a plurality of pieces of firmware data corresponding to a plurality of zonal control units (ZCUs) and a plurality of additional data groups generated by applying a plurality of pieces of firmware update data corresponding to the plurality of ZCUs to the data group; and a memory controller configured to manage the data group and the plurality of additional data groups, and perform a rollback operation based on the data group and the plurality of additional data groups in response to a rollback command for target firmware data received from at least one of the plurality of ZCUs.

According to another aspect of the present disclosure, an operating method of a storage device may include: identifying a plurality of pieces of firmware data received from a plurality of zonal control units (ZCUs), based on tags respectively included in the plurality of pieces of firmware data; storing a data group including the plurality of pieces of firmware data; identifying, based on a tag included in first firmware update data received from an over-the-air (OTA) management circuit and corresponding to a first ZCU among the plurality of ZCUs, the first firmware update data; and storing a first additional data group that is generated based on the data group and the firmware update data, and that is executed by the plurality of ZCUs.

According to another aspect of the present disclosure, a storage device may include: a non-volatile memory; a buffer memory; and a memory controller configured to: constitute a data group using a first firmware data, a second firmware data, and a third firmware data received from a first processor, a second processor, and a third processor, respectively, and store the data group in the non-volatile memory at a first storage time; add an enable state and the first storage time of the data group to a management table; read the data group into the buffer memory; receive firmware update data and combine the first data group and the firmware update data into an additional data group in the buffer memory; write the additional data group in the non-volatile memory at a second storage time, and add an enable state and the second storage time of the additional data group in the management table.

### BRIEF DESCRIPTION OF DRAWINGS

Embodiments will be more clearly understood from the following detailed description taken in conjunction with the accompanying drawings in which:
FIG. 1 is a diagram schematically illustrating an autonomous driving system according to one or more embodiments;
FIG. 2 is a flowchart illustrating an operating method of a storage device according to one or more embodiments;
FIG. 3 is a diagram schematically illustrating an autonomous vehicle according to one or more embodiments;
FIG. 4A is a block diagram illustrating a zonal control system according to one or more embodiments, FIG. 4B is a block diagram illustrating a data management circuit of FIG. 4A, and FIG. 4C is a view illustrating memory space by a storage device of FIG. 4A to first to third zonal control units (ZCUs);
FIG. 5 is a flowchart illustrating an operating method of a storage device according to one or more embodiments;
FIG. 6 is a flowchart illustrating an operating method of a storage device according to one or more embodiments;
FIG. 7 is a diagram illustrating a method of a data management circuit storing a first data group according to one or more embodiments;
FIGS. 8A and 8B are diagrams illustrating a method of the data management circuit of FIG. 7 storing first and second additional data groups;
FIGS. 9A and 9B are diagrams illustrating a method of storing a first data group and first and second additional data groups of FIGS. 7, 8A, and 8B in a non-volatile memory;
FIGS. 10A and 10B are diagrams illustrating a method of storing the first and second additional data groups of FIGS. 8A and 8B;
FIGS. 11A to 11D are diagrams illustrating first to third data groups stored in a non-volatile memory according to one or more embodiments;
FIGS. 12A and 12B are diagrams illustrating a reliability verification operation for first to third data groups according to one or more embodiments;
FIGS. 13A and 13B are diagrams illustrating a second data group and third and fourth additional data groups stored in a non-volatile memory according to one or more embodiments;
FIG. 14 is a flowchart illustrating a rollback-related operating method of a storage device according to one or more embodiments;
FIGS. 15A and 15B are diagrams illustrating a rollback operation of a storage device according to one or more embodiments;
FIG. 16 is a diagram illustrating a rollback operation of a storage device according to one or more embodiments;
FIG. 17 is a flowchart illustrating an operating method related to migration of a storage device according to one or more embodiments;
FIG. 18 is a diagram illustrating a migration policy according to one or more embodiments;
FIG. 19 is a diagram illustrating a tag including information indicating an automotive safety integrity level (ASIL) grade according to one or more embodiments;
FIG. 20 is a diagram illustrating an operating method further considering an ASIL grade of a storage device according to one or more embodiments; and
FIGS. 21A and 21B are diagrams illustrating an operating method of a storage device that manages data based on a tag of FIG. 19.

### DETAILED DESCRIPTION OF EMBODIMENTS

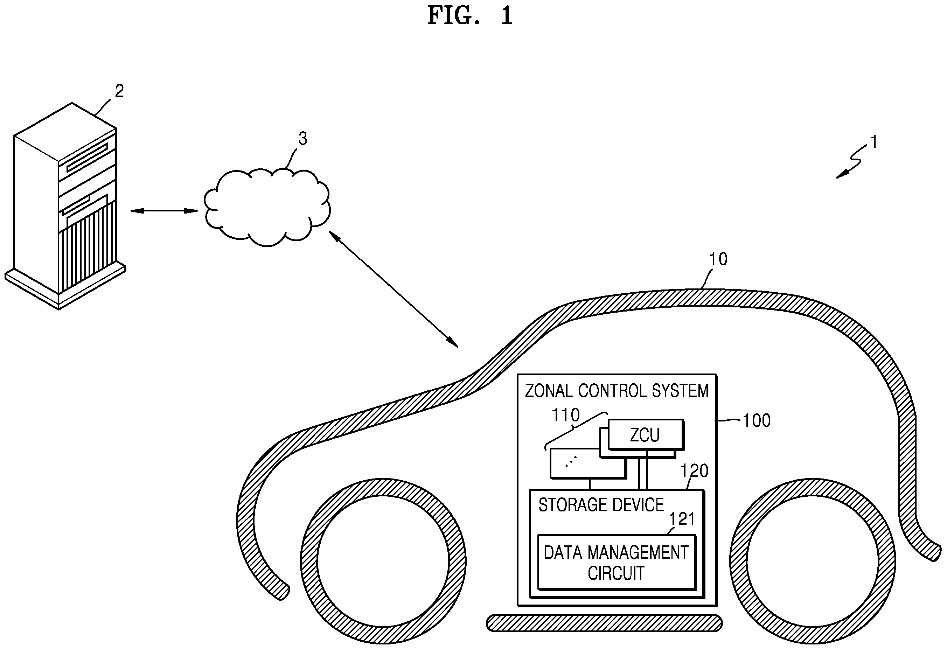

FIG. 1 is a diagram schematically illustrating an autonomous driving system 1 according to one or more embodiments.

Referring to FIG. 1, the autonomous driving system 1 may include an autonomous driving server 2, a network 3, and an autonomous vehicle 10. The autonomous server 2 may distribute firmware data (or software) for autonomous driving or firmware update data for updating the firmware data to the autonomous vehicle 10 through the network 3. The network 3 may be implemented with any one or any combination of vehicle communication technology, wireless Internet technology, short-range communication technology, and mobile communication technology. For example, wireless Internet technology may use at least one of wireless local region network (WLAN), wireless broadband (Wibro), and world interoperability for microwave access (Wimax). For example, as the short-range communication technology, at least one of Bluetooth, near-field communication (NFC), radio frequency identification (RFID), infrared data association, ultra wideband (UWB), and Zigbee may be used. For example, as the mobile communication technology, at least one of new radio (NR), long term evolution (LTE), LTE-advanced, code division multiple access (CDMA), and global system for mobile communication (GSM) may be used.

In one or more embodiments, the autonomous vehicle 10 may include a zonal control system 100 configured to support autonomous driving. The zonal control system 100 may include a plurality of zonal control units (ZCUs) 110 and a storage device 120 shared by the ZCUs. A ZCU may be implemented as hardware such as an electronic control unit (ECU) or a processor for controlling sensors and actuators located in a certain region, and a plurality of ZCUs may be located in various zones within the autonomous vehicle 10. Examples thereof are described below. Meanwhile, the embodiment may be applied not only to the zonal control system 100 including ZCUs but also to an autonomous driving control system including a plurality of ECUs, and in this case, the storage device 120 may be shared by the ECUs.

In one or more embodiments, the storage device 120 may include a data management circuit 121 for managing a plurality of pieces of firmware data executed in the ZCUs 110 and their update or rollback. In this specification, the data management circuit 121 may be implemented as hardware such as a processor configured to execute instructions stored in a memory to perform management operations which are described below.. In this specification, firmware data may be referred to as firmware as software that runs on the ZCU to control components (e.g., sensors or actuators) connected to the ZCU. In this specification, firmware update data is for updating firmware data and may include data for updating all or portion of the firmware data. In addition, in this specification, the operation of the data management circuit 121 may also be referred to as an operation of a storage device or controller.

In one or more embodiments, the data management circuit 121 may classify the pieces of firmware data by a data group unit and store the pieces of firmware data as a plurality of data groups in the storage device 120. In this specification, the data group unit may vary depending on the criteria for classifying the pieces of firmware data. As an example, the same or similar ZCUs, among the ZCUs 110, may be grouped into a plurality of ZCU groups based on at least one of firmware update frequency, set importance (e.g., an automotive safety integrity level (ASIL) grade), etc., and the data group unit may be set so that a data group includes a plurality of pieces of firmware data corresponding to one ZCU group. As another example, the ZCUs 110 may be arbitrarily divided into a plurality of ZCU groups, and the data group unit may be set so that the data group may include a plurality of pieces of firmware data corresponding to one ZCU group. In some embodiments, the data group unit may be set so that the data group includes a plurality of pieces of firmware data corresponding to one ZCU. However, this is only an example, and the data group unit may be set variably to effectively perform a management operation on firmware data.

In addition, the data management circuit 121 may read a plurality of data groups stored in the storage device 120, generate a plurality of additional data groups based on the read data groups and a plurality of pieces of firmware update data, and store the pieces of additional data groups in the storage device 120. In this specification, the additional data group may be defined as a data group in which firmware update data is applied to at least one of at least two pieces of firmware data included in the data group or another additional data group. That is, the data management circuit 121 may generate a plurality of additional data groups in response to update requests for a plurality of data groups stored in the storage device 120, and then store the additional data groups in the storage device 120.

Meanwhile, the storage device 120 may further receive various normal data related to autonomous driving from the ZCUs 110, and the data management circuit 121 may store normal data in the storage device 120. In this specification, normal data may include a processing result generated by processing data obtained from a component connected to each of the ZCUs 110. In some embodiments, normal data may include code executed by the ZCUs 110, which may be unrelated to firmware.

In one or more embodiments, the data management circuit 121 may physically or logically separate a region in which the data group or the additional data group is stored and a region in which normal data is stored.

In one or more embodiments, the data management circuit 121 may distinguish between firmware-related data and normal data based on tags of the received data. As an example, data received by the storage device 120 may include a tag indicating whether the data is executable firmware-related code, and the data management circuit 121 may determine whether the data is firmware-related data by identifying the tag of the received data. In this specification, firmware-related data may be defined as data including firmware data and firmware update data.

In one or more embodiments, before transmitting firmware data provided (or distributed) from the autonomous driving server 2 to the storage device 120 through the network 3, the ZCUs 110 may add, to the firmware data, a tag including information indicating that the firmware data is executable firmware-related code, and then transmit the firmware data including the tag to the storage device 120. In addition, in one or more embodiments, before transmitting firmware update data provided (or distributed) from the autonomous driving server 2 to the storage device 120 through the network 3, an over-the-air (OTA) management circuit included in the zonal control system 100 may add, to the firmware update data, a tag including information indicating that the firmware update data is executable firmware-related code, and then transmit the firmware update data including the tag to the storage device 120. The over-the-air (OTA) management circuit may be implemented using a processor with wireless technologies such as Wi-Fi, cellular networks (e.g., 4G, 5G), Bluetooth, or dedicated short-range communication (DSRC). The over-the-air (OTA) management circuit may support the communication protocols necessary for secure and efficient data transmission, allowing the zonal control system 100 to download and install new firmware versions, fix bugs, improve performance, and add new features. Meanwhile, in the embodiments, the storage device 120 is described as receiving a plurality of pieces of firmware data from the ZCUs 110 and receiving a plurality of pieces of firmware update data from the OTA management circuit, but the subject of transmitting the firmware data and the firmware update data is not limited thereto and the storage device 120 may receive the pieces of firmware data or the pieces of firmware update data from various components.

In one or more embodiments, in response to a rollback command received from one of the ZCUs 110, the data management circuit 121 may perform a rollback operation based on the data groups and the additional data groups stored in the storage device 120. The data management circuit 121 generates and stores a plurality of additional data groups each time the data groups are updated, and as a result, the additional data groups may correspond to the update history. The data management circuit 121 may smoothly support an effective, highly reliable rollback operation based on the additional data groups corresponding to the update history and the data groups corresponding to initial firmware data.

In one or more embodiments, the data management circuit 121 may manage the data groups and the additional data groups stored in the storage device 120 based on a management table. In one or more embodiments, the management table may include a data group ID field indicating a certain data group or a certain additional data group and an information field regarding the certain data group or the certain additional data group. As an example, the information field of the management table may include first information including an activation state (i.e., an enable state) indicating whether the certain data group or the certain additional data group is currently used or available to be used by at least one of the ZCUs 110, second information indicating a linked list, and third information regarding a timestamp indicating a point in time at which the certain data group or the certain additional data group was stored. Embodiments of the management table are described below.

In one or more embodiments, the data management circuit 121 may perform a migration operation on the data groups and the additional data groups stored in the storage device 120 so that memory space of the storage device 120 may be efficiently used. As an example, the data management circuit 121 may perform a migration operation on a data group or an additional data group whose validity has expired among the data groups and the additional data groups, based on the management table. As an example, the data management circuit 121 may migrate the data group or the additional data group whose validity has expired, to a memory operated by higher-level cells than the existing memory in which the data group or the additional data group that exceeds the validity period was stored, or may migrate the data group or the additional data group that exceeds the validity period, to a cloud implemented through the autonomous driving server 2 and the network 3. In some embodiments, the data management circuit 121 may delete a data group or an additional data group predicted to be unnecessary in the future, among data groups or additional data groups whose validity has expired. Examples thereof are described below.

In one or more embodiments, the data management circuit 121 may generate the data groups from the pieces of firmware data based on the ASIL grade given to the pieces of firmware data (or components corresponding to the pieces of firmware data) corresponding to the ZCUs 110 and store the generated pieces of data groups in the storage device 120. At this time, before transmitting the firmware data provided from the autonomous driving server 2 through the network 3 to the storage device 120, the ZCUs 110 may add, to the firmware data, a tag including information indicating an executable firmware-related code and information indicating the ASIL grade given to the corresponding firmware data, and then transmit the firmware data including the tag to the storage device 120. Accordingly, the data management circuit 121 may identify the received firmware data as firmware data based on the tag of the received firmware data and identify the ASIL grade of the firmware data. Embodiments thereof are described below.

By the data management circuit 121 according to one or more embodiments, the storage device 120 may identify the pieces of firmware data and the pieces of firmware update data and store them as data groups and additional data groups, and in response to a rollback command received from one of the ZCUs 110, the storage device 120 may perform an effective and highly reliable rollback operation based on the data groups and the additional data groups.

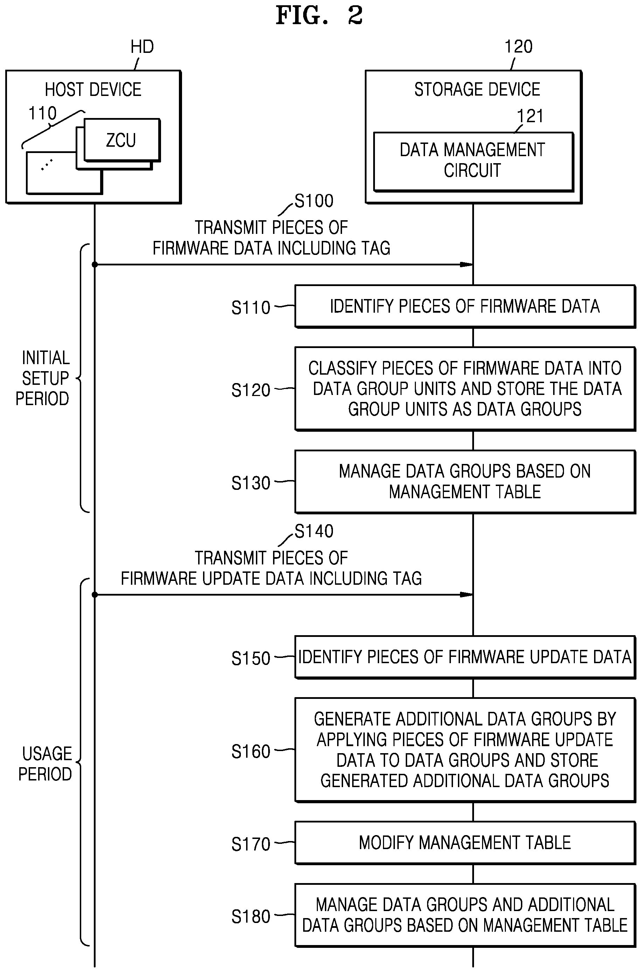

FIG. 2 is a flowchart illustrating an operating method of the storage device 120 according to one or more embodiments. In FIG. 2, for convenience of description, the ZCUs 110 are referred to as a host device HD, and the operation of the storage device 120 may be performed by the data management circuit 121.

Referring to FIG. 2, in operation S100, the host device HD may transmit a plurality of pieces of firmware data including a tag to the storage device 120. In one or more embodiments, the tag included in the pieces of firmware data may include information indicating that the pieces of firmware data are executable firmware-related code.

In operation S110, the storage device 120 may identify executable states of the pieces of firmware data received from the host device HD. In one or more embodiments, the storage device 120 may identify the pieces of firmware data based on the tag included in the firmware data.

In operation S120, the storage device 120 may classify the pieces of firmware data into data group units and store the pieces of firmware data as a plurality of data groups in a memory region.

In operation S130, the storage device 120 may manage the pieces of data groups based on a management table.

The period including operations S100 to S130 may be defined as an initial setup period. In one or more embodiments, the storage device 120 may collectively receive the pieces of firmware data from the ZCUs 110 during the initial setup period and manage the pieces of firmware data as the data groups to ensure that the ZCUs 110 may smoothly execute the pieces of firmware data. In this specification, the initial setup period may refer to a time period during which the operation of the host device HD is prepared before providing autonomous driving services to users.

In operation S 140, the host device HD may transmit the pieces of firmware update data including a tag to the storage device 120. In one or more embodiments, the tag included in the pieces of firmware update data may include information indicating that the firmware update data is executable firmware-related code. Meanwhile, the host device HD may further include an OTA management circuit, and the OTA management circuit may be a transmission subject of the pieces of firmware update data.

In operation S150, the storage device 120 may identify the pieces of firmware update data. In one or more embodiments, the storage device 120 may identify the pieces of firmware update data based on the tag included in the pieces of firmware update data.

In operation S160, the storage device 120 may generate a plurality of additional data groups by applying the pieces of firmware update data to the data groups and store the additional data groups. In one or more embodiments, the storage device 120 may read the stored data groups into a buffer memory, generate a plurality of additional data groups by applying a plurality of pieces of firmware update data to the read data groups, and store the generated additional data groups in the memory region.

In operation S170, the storage device 120 may modify (or update) the management table. In one or more embodiments, the storage device 120 may modify the management table so that the additional data groups correspond to the update history of the data groups.

In operation S180, the storage device 120 may manage the data groups and the additional data groups based on the management table. In one or more embodiments, the storage device 120 may read at least one of the data groups and the additional data groups based on the management table and provide the read data group to the host device HD for execution. In addition, in one or more embodiments, the storage device 120 may perform a migration operation on a data group or an additional data group whose validity has expired among the data groups and the additional data groups, based on the management table.

The period including operations S140 to S180 may be defined as a usage period. In one or more embodiments, the storage device 120 may receive the pieces of firmware update data from the OTA management circuit in the usage period, and the storage device 120 may perform update on the data groups based on the pieces of firmware update data. A certain data group may be updated multiple times, and thus, several additional data groups corresponding to the certain data group may be generated. That is, the storage device 120 may manage the data group before being updated or the additional data group to be used in a rollback operation in the future, rather than deleting or processing the same as invalid data. In this specification, the usage period may be understood as a period in which autonomous driving services are provided to users.

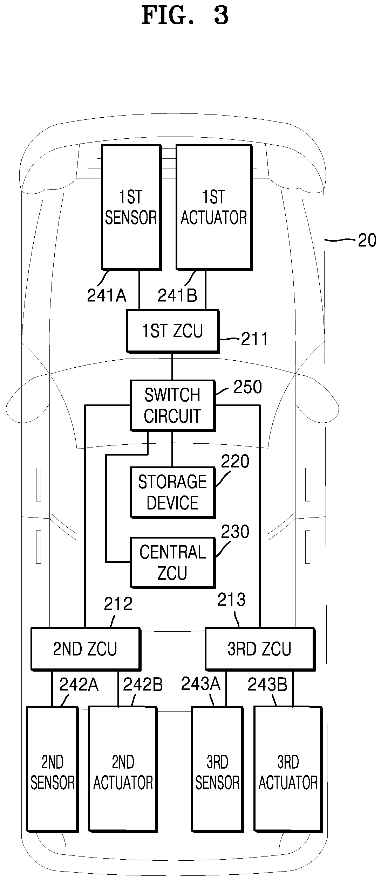

FIG. 3 is a diagram schematically illustrating an autonomous vehicle 20 according to one or more embodiments. In FIG. 3, only the components necessary to describe the one or more embodiments are shown, and in some embodiments, the autonomous vehicle 20 may include more components.

Referring to FIG. 3, the autonomous vehicle 20 may include first to third ZCUs 211, 212, 213, a storage device 220, a central ZCU 230, first to third sensors 241A, 242A, and 243A, first to third actuators 241B, 242B, 243B, and a switch circuit 250.

In one or more embodiments, the first ZCU 211 may be located at a first position of the autonomous vehicle 20 and control the first sensor 241A and the first actuator 241B that are adjacent thereto. The first ZCU 211 may be connected to the first sensor 241A and the first actuator 241B through a wired or wireless link. The second ZCU 212 may be located at a second position of the autonomous vehicle 20 and may control the second sensor 242A and the second actuator 242B that are adjacent thereto. The second ZCU 212 may be connected to the second sensor 242A and the second actuator 242B through a wired or wireless link. The third ZCU 213 may be located at a third position of the autonomous vehicle 20 and may control the third sensor 243A and the third actuator 243B that are adjacent thereto. The third ZCU 213 may be connected to the third sensor 243A and the third actuator 243B through a wired or wireless link. The first to third ZCUs 211, 212, and 213 may support all functions in a local sub-region of the autonomous vehicle 20. For example, the first to third ZCUs 211, 212, and 213 may perform control, data processing, and data management on the first to third sensors 241A, 242A, and 243A and first to third actuators 241B, 242B, and 243B that are adjacent thereto at certain positions of the autonomous vehicle 20, respectively.

In one or more embodiments, the central ZCU 230 may be connected to the first to third ZCUs 211, 212, and 213 through the switch circuit 250 by a wireless or wired link and perform overall control and management operations on the first to third ZCUs 211, 212, and 212, and 213. In some embodiments, the central ZCU 230 may be implemented to support functions, such as advanced driver assistance system (ADAS) or in-vehicle infortainment (IVI).

In one or more embodiments, the storage device 220 may be connected to the first to third ZCUs 211, 212, and 213 and the central ZCU 230 through the switch circuit 250 by a wireless or wired link and store and manage data generated by the first to third ZCUs 211, 212, and 213 and the central ZCU 230. In this manner, the storage device 220 may be shared by the first to third ZCUs 211, 212, and 213 and the central ZCU 230 and may be implemented as an electrical & electronic (E&E) architecture. The storage device 220 according to embodiments of the disclosure may be shared by the first to third ZCUs 211, 212, and 213 and the central ZCU 230 and may effectively provide memory space.

In one or more embodiments, the switch circuit 250 may include a plurality of switches, and smooth communication may be supported between the first to third ZCUs 211, 212, and 213, the central ZCU 230, and the storage device 220 by controlling the switches. In some embodiments, the switch circuit 250 may be implemented to include Ethernet switches, and here, the first to third ZCUs 211, 212, and 213, the central ZCU 230, and the storage device 220 may be connected via mutual Ethernet links.

In one or more embodiments, the autonomous vehicle 20 may support vehicle communication network technology, and based on the vehicle communication network technology, the first to third ZCUs 211, 212, and 213, the storage device 220, the central ZCU 230, the first to third sensors 241A, 242A, and 243A, and the first to third actuators 241B, 242B, and 243B may communicate with each other. As an example, the vehicle communication network technology may include at least one of a controller area network (CAN), a local interconnect network (LIN), automotive Ethernet, FlexRay, and media oriented system transport (MOST).

In one or more embodiments, the first to third sensors 241A, 242A, and 243A may include at least one of an object detection device, an internal camera, and a sensing device. The object detection device may detect external objects and may include a camera, radar, Light Detection and Ranging (Lidar), etc. The internal camera may detect a driver or a fellow passenger. The sensing device may include at least one of an inertial navigation unit (INU) sensor, a collision sensor, a wheel sensor, a speed sensor, an inclination sensor, a weight detection sensor, a heading sensor, a position module, a vehicle forward/backward sensor, a battery sensor, a fuel sensor, a tire sensor, a steering sensor based on steering wheel rotation, a temperature sensor inside a vehicle, a humidity sensor inside a vehicle, an ultrasonic sensor, an illumination sensor, an accelerator pedal position sensor, and a brake pedal position sensor.

In one or more embodiments, the first to third actuators 241B, 242B, and 243B may include at least one of a braking device (e.g., anti-lock braking system (ABS)), a vehicle body stability control device (e.g., electronic stability control (ESC)), a steering device (e.g., motor driven power steering (DPS)), an active airbag device, and a seat belt device.

However, the autonomous vehicle 20 illustrated in FIG. 3 is provided as an example without limiting the structure of the autonomous vehicle 20, and the autonomous vehicle 20 may further include a ZCU, a sensor, or an actuator, and the arrangement of the ZCUs, sensors, and actuators may vary.

In embodiments to be described below, the description focuses on the embodiment of the storage device shared by the first to third ZCUs 211, 212, and 213 of FIG. 3, but this is an example to aid understanding and the inventive concept are not limited thereto.

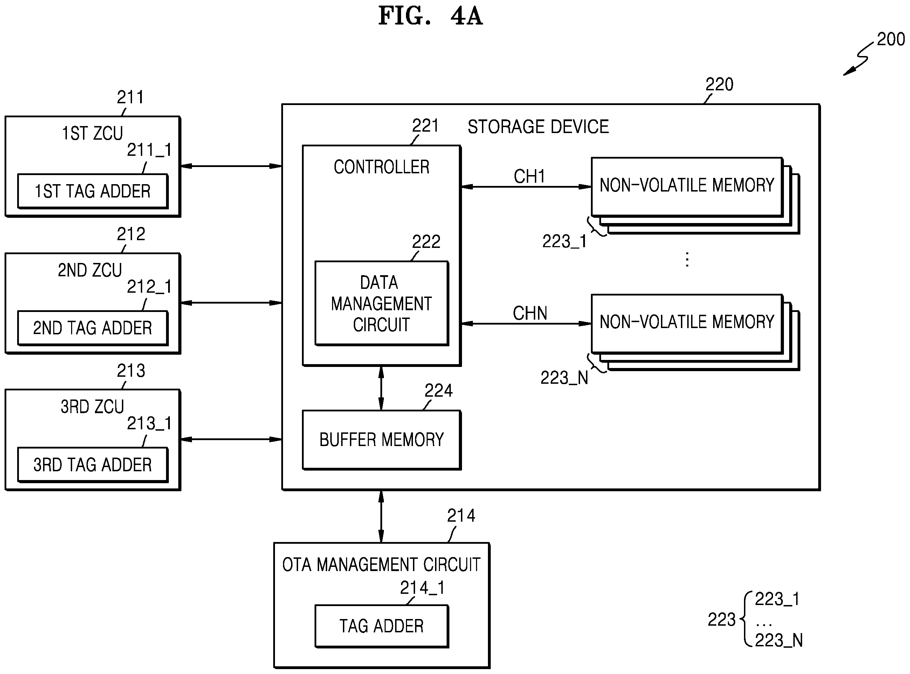

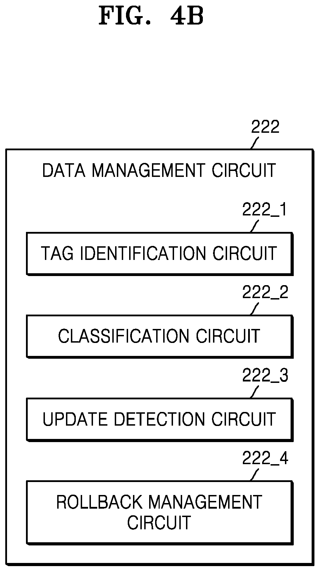

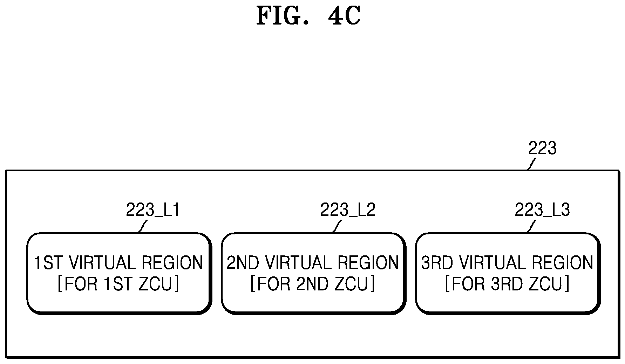

FIG. 4A is a block diagram illustrating a zonal control system 200 according to one or more embodiments, FIG. 4B is a block diagram illustrating a data management circuit 222 of FIG. 4A, and FIG. 4C is a block diagram of a memory space 223 provided to the first to third ZCUs 211, 212, and 213 by the storage device 220 of FIG. 4A.

Referring to FIG. 4A, the zonal control system 200 may include the first to third ZCUs 211, 212, and 213, an OTA management circuit 214, and the storage device 220.

In one or more embodiments, the first ZCU 211 may include a first tag adder 211_1 and may add a tag to first data transmitted from the first ZCU 211 to the storage device 220 through the first tag adder 211_1. As an example, the first ZCU 211 may add, to first firmware data executed to control a first component connected to the first ZCU 211, a tag including information indicating that the first firmware data is executable firmware-related code, and transmit the first firmware data including the tag to the storage device 220. In addition, before transmitting the tag-added first firmware data, the first ZCU 211 may transmit a write command and a first logical address to the storage device 220.

In one or more embodiments, the second ZCU 212 may include a second tag adder 212_1 and may add a tag to second data transmitted from the second ZCU 212 to the storage device 220 through the second tag adder 212_1. As an example, the second ZCU 212 may add, to second firmware data executed to control a second component connected to the second ZCU 212, a tag including information indicating that the second firmware data is executable firmware-related code, and transmit the second firmware data including the tag to the storage device 220. In addition, before transmitting the second firmware data to which the tag is added, the second ZCU 212 may transmit a write command and a second logical address to the storage device 220.

In one or more embodiments, the third ZCU 213 may include a third tag adder 213_1 and may add a tag to the third data transmitted from the third ZCU 213 to the storage device 220 through the third tag adder 213 _1. As an example, the third ZCU 213 may add, to third firmware data executed to control a third component connected to the third ZCU 213, a tag including information indicating that the third firmware data is executable firmware-related code, and transmit the third firmware data including the tag to the storage device 220. In addition, before transmitting the third firmware data to which the tag is added, the third ZCU 213 may transmit a write command and a third logical address to the storage device 220.

In one or more embodiments, the OTA management circuit 214 may include a tag adder 214_1 and may add a tag to the fourth data transmitted from the OTA management circuit 214 to the storage device 220 through the tag adder 214_1. As an example, the OTA management circuit 214 may add, to firmware update data corresponding to one of the first to third ZCUs 211, 212, and 213 distributed from the autonomous driving server 2 of FIG. 1, a tag including information indicating that the firmware update data is executable firmware-related code, and transmit the firmware update data including the tag to the storage device 220. In addition, before transmitting the firmware update data to which the tag is added, the OTA management circuit 214 may transmit a write command and a fourth logical address to the storage device 220.

In one or more embodiments, the storage device 220 may include a controller 221, first to N-th non-volatile memories 223_1 to 223_N, and a buffer memory 224. The first to N-th non-volatile memories 223_1 to 223_N may be connected to the controller 221 through first to N-th channels CH1 to CHN. For example, the first to N-th non-volatile memories 223_1 to 223_N may include one of NAND flash memory, vertical NAND (VNAND), NOR flash memory, resistive random access memory (RRAM), phase-change memory (PRAM), magnetoresistive random access memory (MRAM), ferroelectric random access memory (FRAM), spin transfer torque random access memory (STT-RAM), etc. In some embodiments, the first to N-th non-volatile memories 223_1 to 223_N may be implemented in a three-dimensional array structure.

In one or more embodiments, the controller 221 may include a data management circuit 222. The data management circuit 222 may identify the first third firmware data received from the first to third ZCUs 211, 212, and 213 as executable firmware-related code through the tags of the first to third firmware data and may store the first to third firmware data as a data group in the first to N-th non-volatile memories 223_1 to 223_N. In addition, the data management circuit 222 may identify the firmware update data received from the OTA management circuit 214 as executable firmware-related code through the tag of the firmware update data and may read the data group stored in the first to N-th non-volatile memories 223_1 to 223_N to the buffer memory 224. The data management circuit 222 may generate an additional data group based on the read data group and the firmware update data and store the generated additional data group in the first to N-th non-volatile memories 223_1 to 223_N.

In one or more embodiments, the data management circuit 222 may manage the data group and the additional data group stored in the first to N-th non-volatile memories 223_1 to 223_N based on the management table. In addition, the data management circuit 222 may perform a rollback operation based on the management table, the data group, and the additional data group in response to a rollback command received from one of the first to third ZCUs 211, 212, and 213.

Referring further to FIG. 4B, the data management circuit 222 may include a tag identification circuit 222_1, a classification circuit 222_2, an update detection circuit 222_3, and a rollback management circuit 222_4. The configuration of the data management circuit 222 illustrated in FIG. 4B is an example to clearly show the operation of the data management circuit 222, and the data management circuit 222 may be implemented by single integrated hardware, software, or a combination of hardware and software.

In one or more embodiments, the tag identification circuit 222_1 may identify whether received data is executable firmware-related code based on the tag of the data received by the storage device 220. In some embodiments, the tag identification circuit 222_1 may additionally identify an ASIL grade corresponding to the received data based on the tag of the received data. The ASIL may be categorized into multiple levels, for example, four levels: ASIL A, ASIL B, ASIL C, and ASIL D. ASIL D may indicate the highest risk level which requires the most rigorous safety measures. Conversely, ASIL A may represent the lowest level of risk.

In one or more embodiments, the classification circuit 222_2 may classify a plurality of pieces of firmware data identified by the executable firmware-related code into data group units to generate a plurality of data groups and may store the generated data groups. As an example, the classification circuit 222_2 may generate one data group from first to third firmware data corresponding to the first to th3ird ZCUs 211, 212, and 213. In some embodiments, classification circuit 222_2 may classify a plurality of firmware data further based on the ASIL grade identified by tag identification circuit 222_1.

In one or more embodiments, the update detection circuit 222_3 may generate a plurality of additional data groups based on the pieces of firmware update data identified by the executable firmware-related code by the tag identification circuit 222_1 and the prestored data groups and may store the generated additional data groups. As an example, the update detection circuit 222_3 may generate an additional data group by applying the firmware update data to the data group including the first to third firmware data, and may store the additional data group.

In one or more embodiments, the classification circuit 222_2 and the update detection circuit 222_3 may modify (or update) the management table based on the generated data groups and the additional data groups.

In one or more embodiments, the rollback management circuit 222_4 may perform a rollback operation based on the management table, the stored data groups, and the additional data groups in response to a received rollback command.

Referring further to FIG. 4C, the storage device 220 may be shared by the first to third ZCUs 211, 212, and 213, and the storage device 220 may provide logically separated memory spaces to the first to third ZCUs 211, 212, and 213.

In one or more embodiments, the first to N-th non-volatile memory devices 223_1 to 223_N may be recognized as a virtual memory space 223 by the first to third ZCUs 211, 212, and 213, and the virtual memory space 223 may include a first virtual region 223_L1 allocated to the first ZCU, a second virtual region 223_L2 allocated to the second ZCU, and a third virtual region 223_L3 allocated to the third ZCU.

In one or more embodiments, the first to third ZCUs 211, 212, and 213 may recognize that the firmware data thereof and the updated firmware data thereof are stored in the first to third virtual regions 223_L1, 223_L2, and 223_L3. However, in reality, the data management circuit 222 may store and manage the data group including the first to third firmware data of the first to third ZCUs 211, 212, and 213 and the additional data group reflecting the firmware update data in the physical memory spaces of the first to third N-th non-volatile memory devices 223_1 to 223_N.

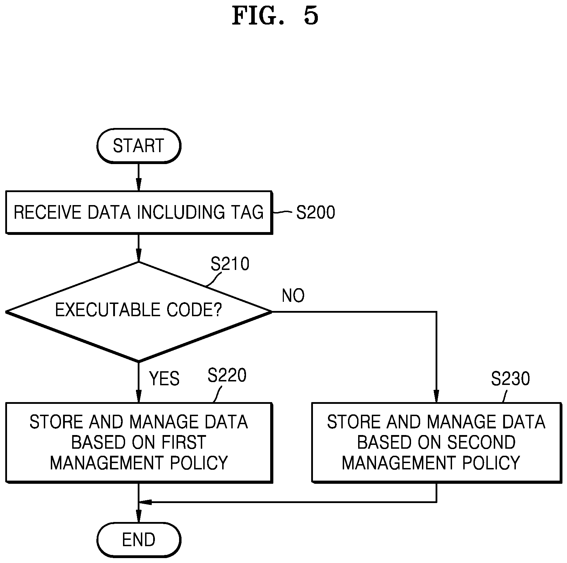

FIG. 5 is a flowchart illustrating an operating method of a storage device according to one or more embodiments.

Referring to FIG. 5, in operation S200, the storage device may receive data including a tag. In one or more embodiments, the tag may include information indicating whether the data is executable firmware-related code.

In operation S210, the storage device may determine whether the received data is executable firmware-related code based on the tag of the received data.

If the received data is determined to be executable firmware-related code ('YES' in operation S210), the storage device may store and manage data based on a first management policy in operation S220. In this specification, the first management policy is a management policy for firmware data or firmware update data, which is executable firmware-related code, and may be defined as a management policy using the data group and additional data group described above.

If the received data is determined to be non-executable firmware-related code ('No' in operation S210), the storage device may store and manage data based on a second management policy in operation S230. In this specification, the second management policy is a management policy for normal data and may be defined as a management policy for performing a general memory operation.

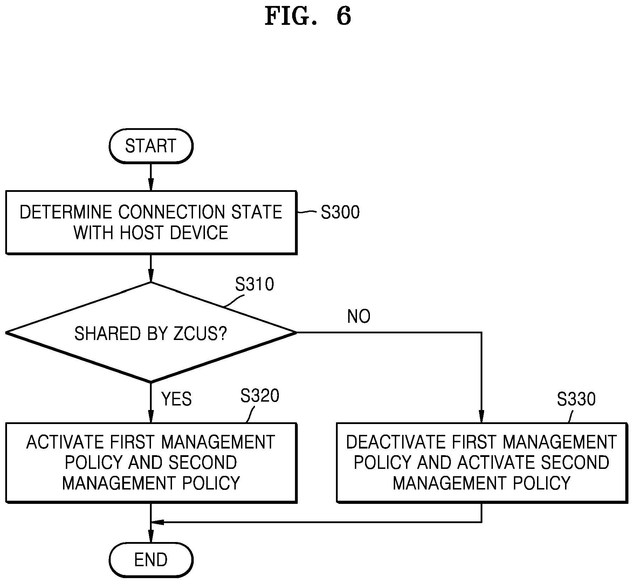

FIG. 6 is a flowchart illustrating an operating method of a storage device according to one or more embodiments.

Referring to FIG. 6, in operation S300, the storage device may determine a connection state with the host device. In one or more embodiments, the host device may include a plurality of ZCUs. The storage device may be connected to the host device and may determine a connection state with the host device based on the number of activated links or a link setting.

In operation S310, the storage device may determine whether the storage device is shared by the ZCUs based on a determination result in operation S300.

When the storage device is shared by the ZCUs ('YES' in operation S310), the storage device may activate the first management policy and the second management policy described above with reference to FIG. 5 in operation S320. Accordingly, the storage device may apply the first management policy to the firmware data or the firmware update data that is executable firmware-related code and apply the second management policy to normal data.

When the storage device is not shared by the ZCUs (`NO in operation S310), the storage device may deactivate the first management policy and activate the second management policy in operation S330. Accordingly, the storage device may collectively apply the second management policy to the received data. That is, the storage device may store and manage the received data by performing a general memory operation on the received data. As an example, when the firmware data is updated by the firmware update data, the storage device may manage the existing firmware data to be deleted based on the second management policy.

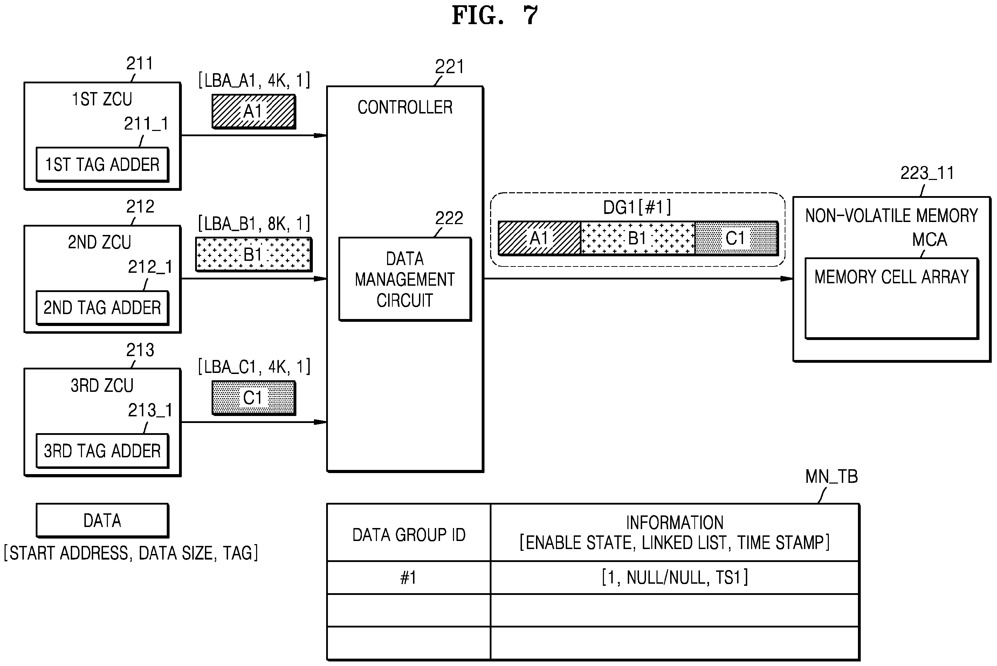

FIG. 7 is a diagram illustrating a method of the data management circuit 222 storing a first data group DG1 according to one or more embodiments.

Referring to FIG. 7, the first ZCU 211 may transmit firmware data A1 including a start address LBA_A1, a data size of 4K (kilobyte), and a tag having a value of 1 to the controller 221. The second ZCU 212 may transmit firmware data B1 including a start address of LBA_B1, a data size of 8K, and a tag having a value of 1 to the controller 221. In addition, the third ZCU 213 may transmit firmware data C1 including a start address of LBA_C1, a data size of 4K, and a tag having a value of 1 to the controller 221. The firmware data A1, B1, and C1 may contain details regarding their respective firmware, such as the memory address where the firmware is stored, its data size, and tag information. The firmware data A1, B1, and C1 may not contain the firmware code itself but rather serve as descriptors or metadata for the firmware, and may be referred to as "firmware metadata" or "firmware descriptors." However, data or information included in the firmware data A1, B1, and C1 are not limited thereto, and the firmware data A1, B1, and C1 may also include firmware code or actual data, each having sizes of 4K, 8K, and 4K, respectively.

In one or more embodiments, the data management circuit 222 may determine that the tag values of firmware data A1, firmware data B1, and firmware data C1 are '1', thereby identifying that the firmware data A1, firmware data B1, and firmware data C1 are executable firmware-related codes. The data management circuit 222 may generate a first data group DG1 including the firmware data A1, firmware data B1, and firmware data C1 to be stored in the memory cell array MCA of a non-volatile memory 223_11. Meanwhile, the data management circuit 222 may map the starting addresses LBA_A1, LBA B1, and LBA_C1 of the firmware data A1, firmware data B1, and firmware data C1 to physical addresses of a region in which the first data group DG1 is stored, and manage the same.

In one or more embodiments, the data management circuit 222 may modify (or update) the management table MN_TB based on the generated first data group DG1. As an example, the management table MN_TB may include a data group ID field (DATA GROUP ID) indicating a certain data group or a certain additional data group, and an information field (INFORMATION) regarding the certain data group or the certain additional data group. Data in the information field (INFORMATION) may be stored in a specific format, for example, tuple having three components: a first component including an activated state (ENABLE STATE) indicating whether the certain data group or the certain additional data group is currently used or available to be used by the first to third ZCUs 211, 212, and 213, a second component indicating a linked list (LINKED LIST), and a third component regarding a timestamp (TIMESTAMP) indicating a time point at which certain data group or certain additional data group is stored (i.e., data storage time). While the information field is illustrated as storing data in a tuple format in FIG. 7, embodiments of the present disclosure are not limited to this format, and each piece of data in the information field may contain a varying number of components.

In one or more embodiments, the data management circuit 222 may store information of Data Group ID #1 indicating the first data group DG1 in the management table MN_TB, store '1' indicating that the first data group DG1 is currently used or available to be used by the first to third ZCUs 211, 212, and 213, as first information, in the management table MN_TB, store NULL/NULL indicating that there is no data group or additional data group before and after the first data group DG1, as second information, in the management table MN_TB, and store TS1, a time point at which the first data group DG1 is stored, as third information, in the management table MN_TB.

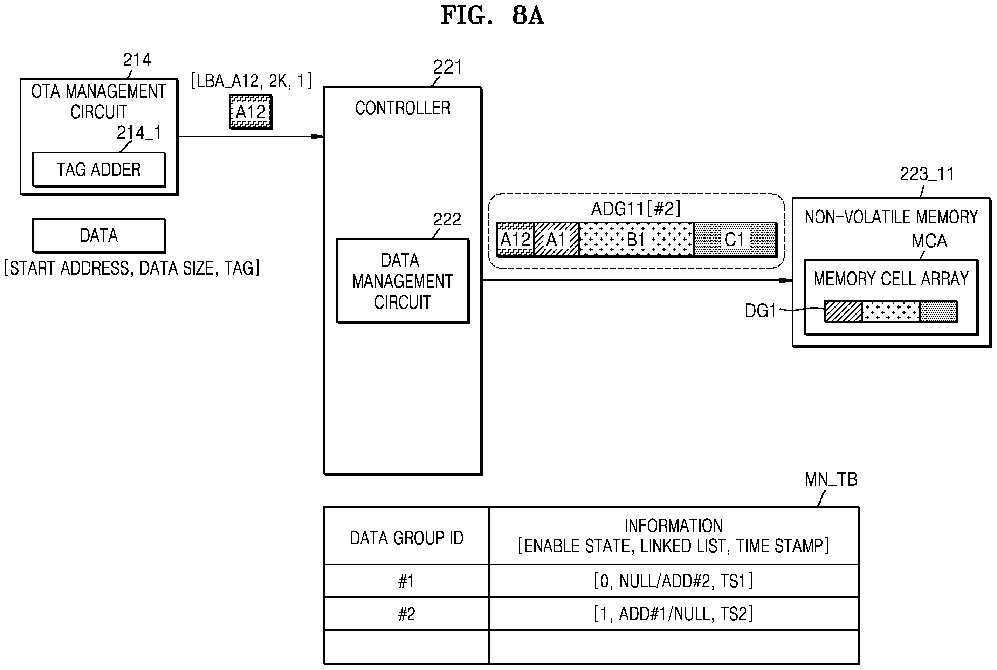

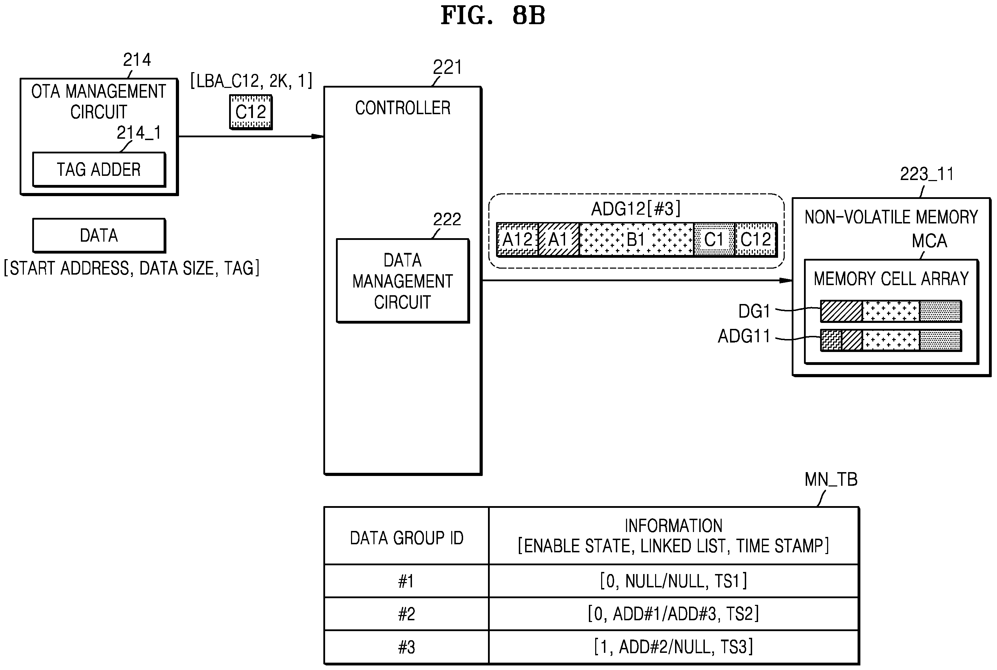

FIGS. 8A and 8B are diagrams illustrating a method of the data management circuit 222 of FIG. 7 storing first and second additional data groups ADG11 and ADG12.

Referring further to FIG. 8A, the OTA management circuit 214 may transmit, to the controller 221, firmware update data A12 having a start address of LBA_A12 and a data size of 2K and including a tag having a value of 1. The start address LBA_A12 refers to a memory location where the firmware update data A12 begins in the non-volatile memory 223_11. The firmware update data A12 may be transmitted to update the firmware data A1 in FIG. 7.

In one or more embodiments, the data management circuit 222 may determine that the tag value of the firmware update data A12 is '1', thereby identifying that the firmware update data is executable firmware-related code. The data management circuit 222 may generate a first additional data group ADG11 based on the first data group DG1 stored in the memory cell array MCA and the firmware update data A12 and store the first additional data group ADG11 in the memory cell array MCA.

In one or more embodiments, the data management circuit 222 may modify (or update) the management table MN_TB based on the generated first additional data group ADG11. In one or more embodiments, the data management circuit 222 may store information of Data Group ID #2 indicating the first additional data group ADG11 in the management table MN_TB, store, as a first component, '1' indicating that the first additional data group ADG11 is currently used or available to be used by the first to third ZCUs 211, 212, and 213 in the management table MN_TB, store, as a second component, `ADD#1 (representative physical address corresponding to the first data group DG1)/NULL' indicating that a data group before the first additional data group ADG11 is the first data group DG1 and there is no additional data group after the first additional data group ADG11 in the management table MN_TB, and store, as a third component, TS2, which is a time point at which the first additional data group ADG11 is stored, in the management table MN_TB.

In addition, the data management circuit 222 may modify the first information and the second information corresponding to the first data group DG1, respectively, to '0' indicating that the first data group DG1 is not currently used or not available to be used by the first to third ZCUs 211, 212, and 213 and to the 'NULL/ADD#2 (representative physical address corresponding to the first additional data group ADG11)' indicating that the additional data group after the first data group DG1 is the first additional data group ADG11.

Meanwhile, the representative physical address corresponding to the data group or additional data group may be managed in a flash translation layer (FTL) of the controller 221, and a detailed description thereof is omitted.

Referring further to FIG. 8B, the OTA management circuit 214 may transmit firmware update data C12 having a start address of LBA_C12 and a data size of 2K and including a tag having a value of '1' to the controller 221. The firmware update data C12 may be transmitted to update the firmware data C1 in FIG. 7.

In one or more embodiments, the data management circuit 222 may identify that the tag value of the firmware update data C12 is ` 1' and identify that the firmware update data C12 is executable firmware-related code. The data management circuit 222 may generate a second additional data group ADG12 based on the first additional data group ADG1 stored in the memory cell array MCA and the firmware update data C12 and store the same in the memory cell array MCA.

In one or more embodiments, the data management circuit 222 may modify (or update) the management table MN_TB based on the generated second additional data group ADG12. In one or more embodiments, the data management circuit 222 may store information of Data Group ID #3 indicating the second additional data group ADG12 in the management table MN_TB, store, as a first component, '1' indicating that the second additional data group ADG21 is currently used or available to be used by the first to third ZCUs 211, 212, and 213 in the management table MN_TB, store, as a second component, `ADD#2 (representative physical address corresponding to the first additional data group ADG111)/NULL' indicating that a data group before the second additional data group ADG12 is the first additional data group ADG11 and there is no additional data group after the second additional data group ADG12 in the management table MN_TB, and store, as a third component, TS3, which is a time point at which the second additional data group ADG12is stored, in the management table MN_TB. In addition, the data management circuit 222 may modify the first information and the second information corresponding to the first additional data group ADG11, respectively, to '0' indicating that the additional data group ADG11 is not currently used or not available to be used by the first to third ZCUs 211, 212, and 213 and to the 'ADD#1/ADD#3 (representative physical address corresponding to the second additional data group ADG12)' indicating that the additional data group after the first additional data group ADG11 is the second additional data group ADG12.

In this manner, the data management circuit 222 may manage the first data group DG1 and the first and second additional data groups ADG11 and ADG12 corresponding to the update history based on the management table MN_TB and may provide the latest firmware data reflecting all updates based on the management table MN_TB to the first to third ZCUs 211, 212, and 213 of FIG. 7. In detail, the data management circuit 222 may read the second additional data group ADG12 from the non-volatile memory 223_11, may extract the firmware data A1 to which the firmware update data A12 is applied from the read second additional data group ADG12 and provide the extracted firmware data A1 to the first ZCU 211, may extract the firmware data B1 from the read second additional data group ADG12 and provide the extracted firmware data B1 to the second ZCU 212, and may extract firmware data C1 to which the firmware update data C12 is applied and provide the extracted firmware data C1 to the third ZCU 213.

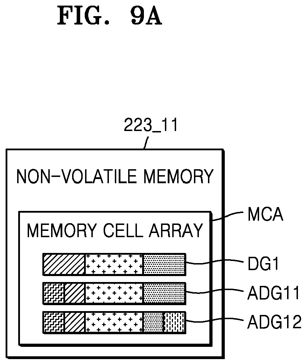

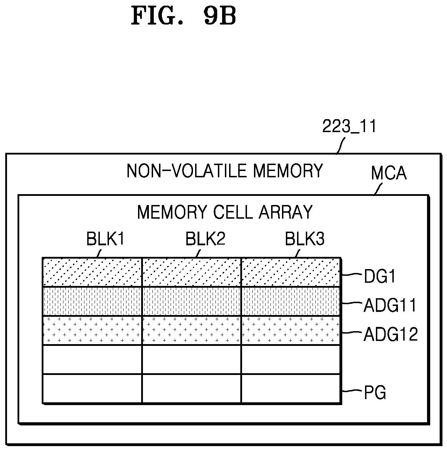

FIGS. 9A and 9B are diagrams illustrating a method of storing the first data group DG1 and the first and second additional data groups ADG11 and ADG12 of FIGS. 7, 8A, and 8B in the non-volatile memory 223_11.

Referring to FIG. 9A, the memory cell array MCA of the non-volatile memory 223_11 may store the first data group DG1 and the first and second additional data groups ADG11 and ADG12 as a result of the operations described above with reference to FIGS. 7, 8A, and 8B.

Referring further to FIG. 9B, the memory cell array MCA may include first to third memory blocks BLK1, BLK2, and BLK3 including a plurality of pages PG. The first to third memory blocks BLK1, BLK2, and BLK3 may be operated as superblocks for storing data, and the first data group DG1 and the first and second additional data groups ADG11 and ADG12 may be stored in the first to third memory blocks BLK1, BLK2, and BLK3.

As an example, a first component (e.g., an enable state) of the first data group DG1 may be stored in a page of the first memory block BLK1, a second component (e.g., a linked listed) of the first data group DG1 may be stored in a page of the second memory block BLK2, and a third component (e.g., a time stamp) of the first data group DG1 may be stored in a page of the third memory block BLK3. The first and second additional data groups ADG11 and ADG12 may also be stored in the first to third memory blocks BLK1, BLK2, and BLK3 in the same or similar manner as the first data group DG1.

However, the implementation example of the memory cell array MCA is merely illustrative, and embodiments of the present disclosure are not limited thereto.

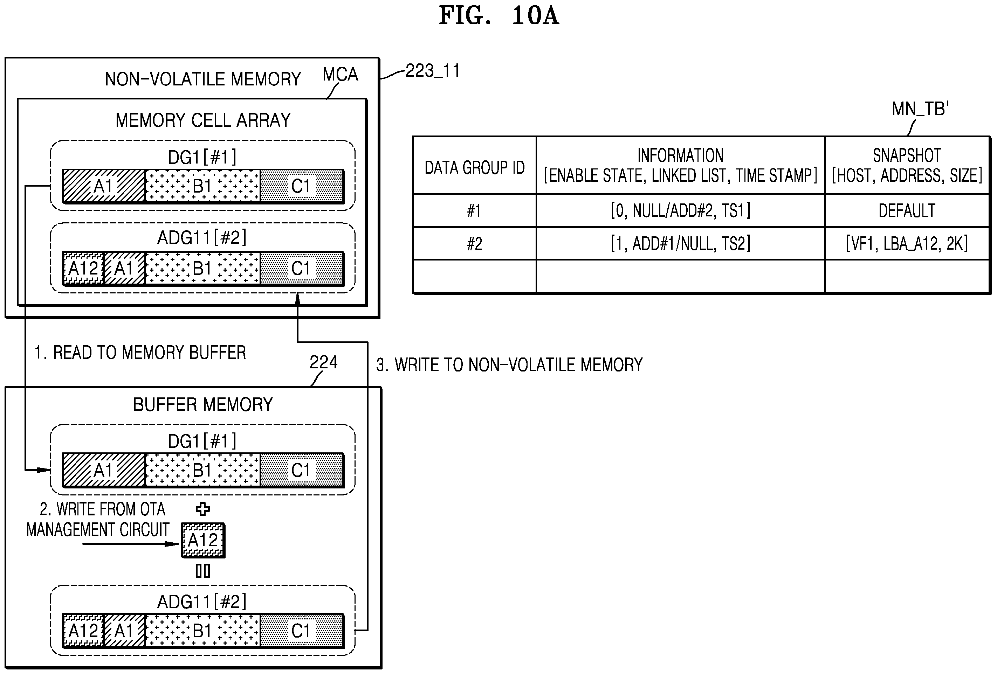

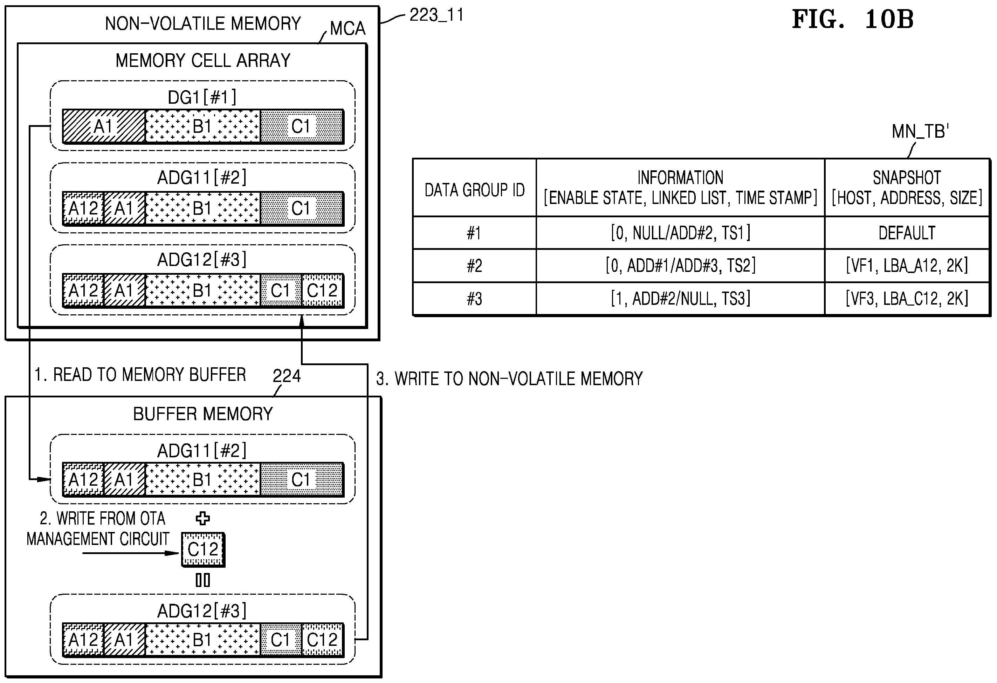

FIGS. 10A and 10B are diagrams illustrating a method of storing the first and second additional data groups ADG11 and ADG12 of FIGS. 8A and 8B. Hereinafter, FIGS. 8A and 8B are further referred to, and the same descriptions as given above with reference to FIGS. 8A and 8B are be omitted.

Referring to FIG. 10A, first, the storage device may read the first data group DG1 stored in the memory cell array MCA of the non-volatile memory 223_11 to the buffer memory 224. Second, the storage device may write (or merge) the firmware update data A12 received from the OTA management circuit 214 to the read first data group DG1 to generate the first additional data group ADG11 as a new data packet or data structure. Third, the storage device may write the generated first additional data group ADG11 to the memory cell array MCA.

Meanwhile, a management table MN_TB' may further include a snapshot field including information indicating a change regarding a certain data group or a certain additional data group. In one or more embodiments, the snapshot field may include data having a first component, HOST, indicating a host corresponding to updated firmware data, a second component, ADDRESS, indicating an update start address, and a third component, SIZE, indicating an updated data size.

The storage device may store default data, DEFAULT, indicating that there is no change, in the snapshot field corresponding to the first data group DG1, in the management table MN_TB'. In addition, the storage device may store, in the snapshot field corresponding to the first additional data group ADG11, a first component having virtual function (VF) 1 indicating the first ZCU 211, second component having LBA_A12 which is a start address of the firmware update data A12, and a third component having 2K which is a size of the firmware update data A12 in the management table MN_TB'.

Referring further to FIG. 10B, first, the storage device may read the first additional data group ADG11 stored in the memory cell array MCA of the non-volatile memory 223_11 to the buffer memory 224. Second, the storage device may write (or merge) the firmware update data C12 received from the OTA management circuit 214 to the read first additional data group ADG11 to generate the second additional data group ADG12 as a new data packet or data structure. Third, the storage device may write the generated second additional data group ADG12 to the memory cell array MCA.

The storage device may store, in the snapshot field corresponding to the second additional data group ADG12, first sub-information having VF3 indicating the third ZCU 213, second sub-information having 'LBA_C12 which is a start address of the firmware update data C12, and third sub-information having 2K which is a size of the firmware update data C12 in the management table MN_TB'.

In this manner, the storage device may store the update history for the first data group DG1 through the snapshot field of the management table MN_TB' and perform a rollback operation based on the information stored in the snapshot field. In some embodiments, the storage device may reduce the data size of the first and second additional data groups ADG11 and ADG12 based on the snapshot field. As an example, the storage device may include only data changed from the first data group DG1 in the first additional data group ADG11 and store the same in the memory cell array MCA and may include only data changed from the first additional data group ADG11 in the second additional data group ADG12 and store the same in the memory cell array MCA.

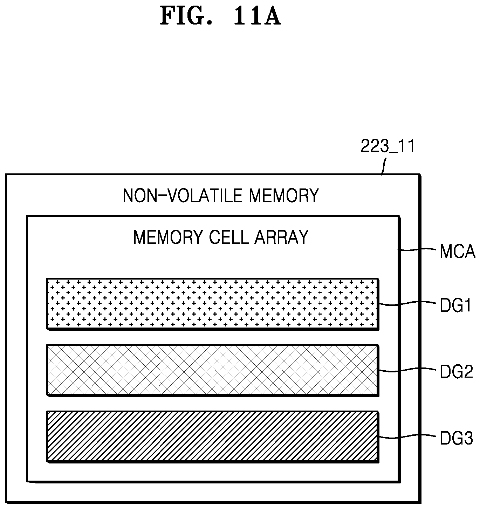

FIGS. 11A to 11D are diagrams illustrating first to third data groups DG1, DG2, and DG3 stored in the non-volatile memory 223_11 according to one or more embodiments. FIGS. 11A to 11D mainly focus on embodiments related to first to third data groups, but the technical ideas disclosed in FIGS. 11A to 11D may also be applied to additional data groups generated from the first to third data groups.

Referring to FIG. 11A, the first to third data groups DG1, DG2, and DG3 may be stored in the memory cell array MCA of the non-volatile memory 223_11. The data sizes of the first to third data groups DG1, DG2, and DG3 may all be the same.

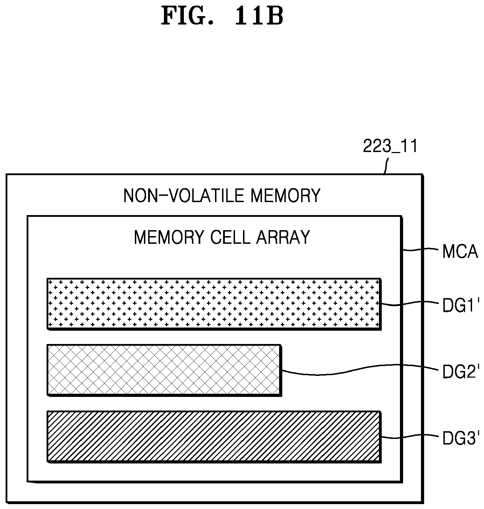

Referring further to FIG. 11B, the data sizes of first to third data groups DG1', DG2', and DG3' may be different. In some embodiments, in order to make up for the insufficient data size of the second and third data groups DG2' and DG3' compared to the first data group DG1', the second and third data groups DG2' and DG3' may be filled with padding data.

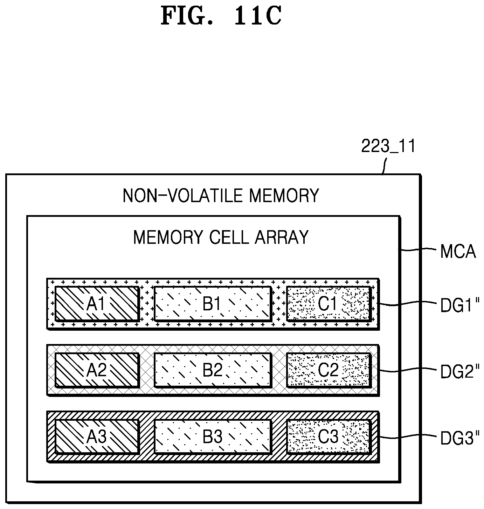

Referring further to FIG. 11C, a first data group DG1" may include firmware data A1 corresponding to the first ZCU, firmware data B1 corresponding to the second ZCU, and firmware data C1 corresponding to the third ZCU. The firmware data A1 may be data executed for control of a first component adjacent to the first ZCU, firmware data B1 may be data executed for control of a second component adjacent to the second ZCU, and firmware data C1 may be data executed for control of a third component adjacent to the third ZCU.

The second data group DG2" may include firmware data A2 corresponding to the first ZCU, firmware data B2 corresponding to the second ZCU, and firmware data C2 corresponding to the third ZCU. The firmware data A2 may be data executed for control of a fourth component adjacent to the first ZCU, the firmware data B2 may be data executed for control of a fifth component adjacent to the second ZCU, and firmware data C2 may be data executed for control of a sixth component adjacent to the third ZCU.

The third data group DG3" may include firmware data A3 corresponding to the first ZCU, firmware data B3 corresponding to the second ZCU, and firmware data C3 corresponding to the third ZCU. The firmware data A3 may be data executed for control of a seventh component adjacent to the first ZCU, the firmware data B3 may be data executed for control of an eighth component adjacent to the second ZCU, and the firmware data C3 may be data executed for control of a ninth component adjacent to the third ZCU.

That is, a data group unit in FIG. 11C may be set to include a plurality of pieces of firmware data corresponding to the first to third ZCUs.

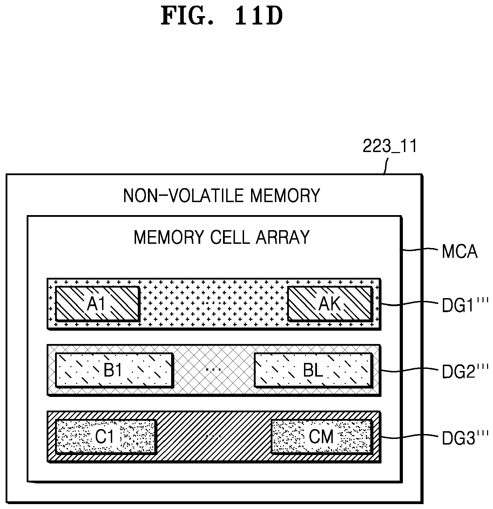

Referring further to FIG. 11D, a first data group DG1‴ may include firmware data A1 to AK corresponding to the first ZCU. A second data group DG2‴ may include firmware data B1 to BL corresponding to the second ZCU. A third data group DG3‴ may include firmware data C1 to CM corresponding to the third ZCU.

The firmware data A1 to AK may be data executed to control K components adjacent to the first ZCU. The firmware data B1 to BL may be data executed to control L components adjacent to the second ZCU. The firmware data C1 to CM may be data executed to control M components adjacent to the third ZCU.

That is, the data group unit in FIG. 11D may be set to include a plurality of pieces of firmware data corresponding to one ZCU.

However, FIGS. 11A to 11D are merely embodiments, and embodiments of the present disclosure are not limited thereto, and the data groups may include a plurality of pieces of firmware data corresponding to the first to third ZCUs in various manners.

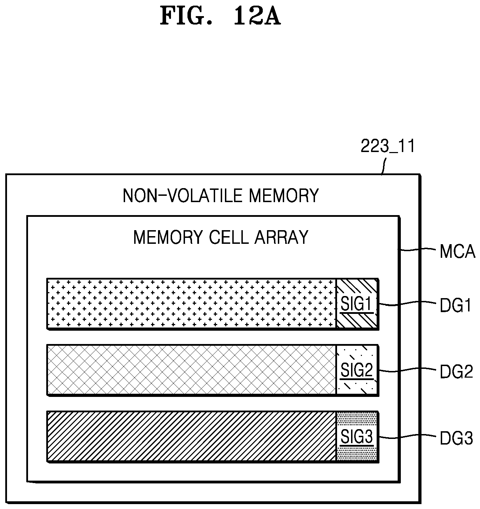

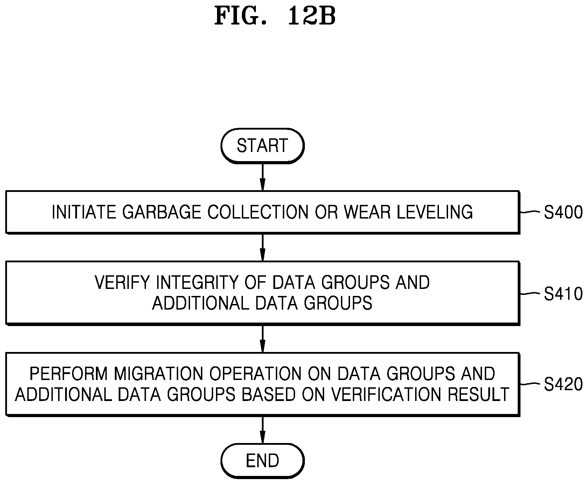

FIGS. 12A and 12B are diagrams illustrating a reliability verification operation for the first to third data groups DG1, DG2, and DG3 according to one or more embodiments. In FIG. 12A, although embodiments related to the first to third data groups are mainly disclosed, it is fully understood that the technical ideas disclosed in FIGS. 12A and 12B may also be applied to additional data groups generated from the first to third data groups.

Referring to FIG. 12A, the first to third data groups DG1, DG2, and DG3 may be stored in the memory cell array MCA of the non-volatile memory 223_11. The first data group DG1 may further include first signature information SIG_1, the second data group DG2 may further include second signature information SIG_2, and the third data group DG3 may further include third signature information SIG_3.

In one or more embodiments, the first signature information SIG_1 may be used to verify the integrity of the first data group DG1, the second signature information SIG_2 may be used to verify the integrity of the second data group DG2, and the third signature information SIG_3 may be used to verify the integrity of the third data group DG3.

Referring further to FIG. 12B, in operation S400, the storage device may initiate garbage collection or wear leveling.

In operation S410, the storage device may verify the integrity of a plurality of data groups and a plurality of additional data groups. In one or more embodiments, the storage device may perform an integrity verification operation based on signature information included in the data groups and the additional data groups. As an example, the storage device may determine whether an encoding or decoding result for a data group matches signature information included in the data group and verify the integrity of the data group based on a verification result.

In operation S420, the storage device may perform a migration operation on the data groups and the additional data groups based on the verification result in operation S410. The migration operation may be due to flash memory maintenance processes like garbage collection or wear leveling. In one or more embodiments, the storage device may perform a migration operation only on those whose integrity has been verified among the data groups and the additional data groups.

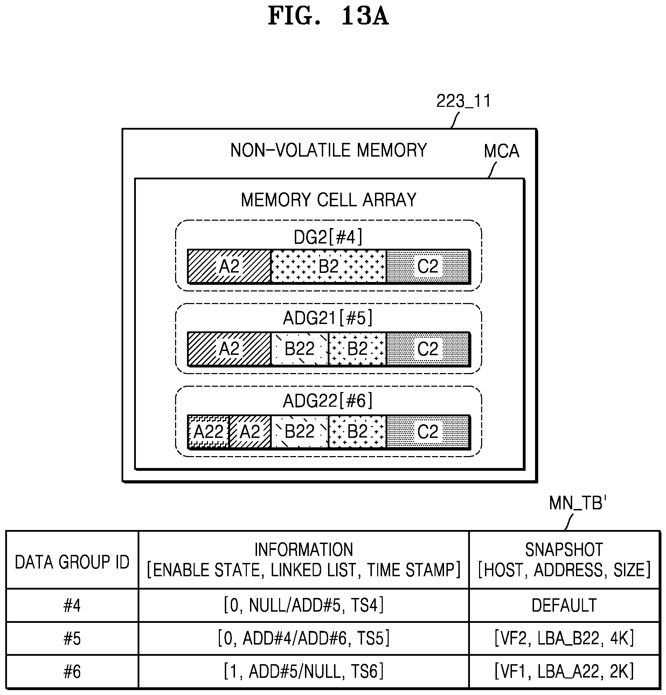

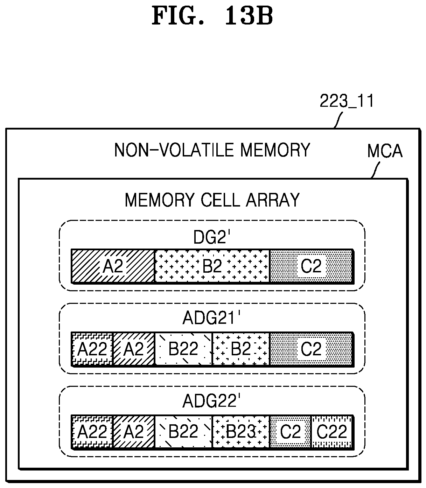

FIGS. 13A and 13B are diagrams illustrating the second data group DG2 and the third and fourth additional data groups ADG21 and ADG22 stored in the non-volatile memory 223_11 according to one or more embodiments.

Referring to FIG. 13A, the second data group DG2 and the third and fourth additional data groups ADG21 and ADG22 may be stored in the memory cell array MCA of the non-volatile memory 223_11. The second data group DG2 may include firmware data A2 corresponding to the first ZCU, firmware data B2 corresponding to the second ZCU, and firmware data C2 corresponding to the third ZCU. The third additional data group ADG21 may be generated by applying firmware update data B22 corresponding to the second ZCU to the second data group DG2. The fourth additional data group ADG22 may be generated by applying firmware update data A22 corresponding to the first ZCU to the third additional data group ADG21.

In this manner, each time a piece of firmware data is updated, an additional data group may be generated and stored. That is, as the firmware data B2 is updated, the third additional data group ADG21 may be generated and stored, and as the firmware data A2 is updated, the fourth additional data group ADG22 may be generated and stored.

Meanwhile, the second data group DG2 and the third and fourth additional data groups ADG21 and ADG22 may be stored in the management table MN_TB'. In detail, the storage device may store information of Data Group ID #4 indicating the second data group DG2 in the management table MN_TB', store, as a first component, '0' indicating that the second data group DG2 is not currently used or not available to be used by the first to third ZCUs, store, as a second component, 'NULL/ADD#5 (representative physical address corresponding to the third additional data group ADG21)' indicating that there is no data group or additional data group before the second data group DG2 and an additional data group after the second data group DG2 is the third additional data group ADG21 in the management table MN_TB', and store, as a third component, TS4 which is a time point at which the second data group DG2 is stored in the management table MN_TB'. In addition, the storage device may store 'DEFAULT' indicating that there is no change in the snapshot field corresponding to the second data group DG2.

The storage device may store information of Data Group ID #5 indicating the third additional data group ADG21 in the management table MN TB', store, as a first component, '0' indicating that the third additional data group ADG21 is not currently used or not available to be used by the first to third ZCUs in the management table MN TB', store, as a second component, `ADD#4 (representative physical address corresponding to the second data group DG2)/ADD#6 (representative physical address corresponding to fourth additional data group ADG22)' indicating that a data group before the third additional data group ADG21 is the second data group DG2 and an additional data group after the third additional data group ADG21 is the fourth additional data group ADG22, and store, as a third component, TS5 which is a time point at which the third additional data group ADG21 is stored in the management table MN TB'. In addition, the storage device may store VF2 indicating the second ZCU as first sub-information in the snapshot field corresponding to the third additional data group ADG21, store LBA_B22, which is a start address of firmware update data B22 as second sub-information, and store 4K, which is a size of the firmware update data B22, as third sub-information.

The storage device may store information of Data Group ID #6 indicating the fourth additional data group ADG22 in the management table MN TB', store, as a first component, '1' indicating that the fourth additional data group ADG22 is currently used or available to be used by the first to third ZCUs in the management table MN TB', store, as a second component, `ADD#5 (representative physical address corresponding to the third additional data group ADG21)/NULL' indicating that a data group before the fourth additional data group ADG22 is the third additional data group ADG21 and there is no additional data group after the fourth additional data group ADG22 in the management table MN_TB', and store, as a third component, TS6 which is a time point at which the fourth additional data group ADG22 is stored in the management table MN TB' . In addition, the storage device may store VF1 indicating the first ZCU in the snapshot field corresponding to the fourth additional data group ADG22, store LBA_A22, which is a start address of firmware update data A22 as second sub-information, and store 2K, which is a size of the firmware update data A22, as third sub-information.

The storage device may perform a rollback operation based on the management table MN TB', and embodiments thereof are described below.

Referring further to FIG. 13B, the second data group DG2' and the third and fourth additional data groups ADG21' and ADG22' may be stored in the memory cell array MCA of the non-volatile memory 223_11. The second data group DG2' may include firmware data A2 corresponding to the first ZCU, firmware data B2 corresponding to the second ZCU, and firmware data C2 corresponding to the third ZCU. The third additional data group ADG21' may be generated by applying the firmware update data A22 corresponding to the first ZCU and applying the firmware update data B22 corresponding to the second ZCU to the second data group DG2. The fourth additional data group ADG22' may be generated by applying the firmware update data B23 corresponding to the second ZCU and applying the firmware update data C22 corresponding to the third ZCU.

In this manner, an additional data group may be generated and stored each time there are two pieces of firmware data. That is, as the firmware data A2 and firmware data B2 are updated, the third additional data group ADG21' may be generated and stored, and as the firmware data B2 and the firmware data C2 are updated, the fourth additional data group ADG22' may be generated and stored.

The description given with reference to FIGS. 13A and 13B is merely one or more embodiments, without being limited thereto, additional data groups may be generated in various manners and stored.

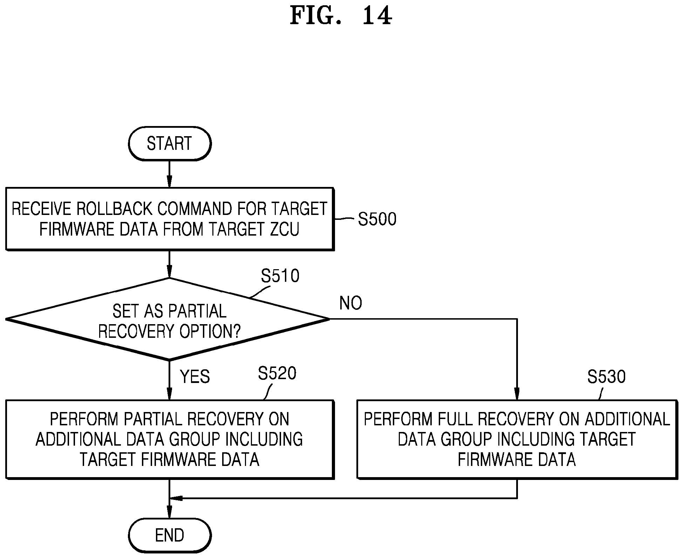

FIG. 14 is a flowchart illustrating a rollback-related operating method of a storage device according to one or more embodiments.

Referring to FIG. 14, in operation S500, the storage device may receive a rollback command for target firmware data from a target ZCU. In one or more embodiments, the target firmware data may be currently used firmware data updated from the target ZCU. For example, if an error continues to occur while the updated firmware data is being executed, the target ZCU may transmit a rollback command to the storage device to execute the firmware data before the update.

In operation S510, the storage device may determine whether a currently set recovery option is a partial recovery option. In this specification, the partial recovery option may be defined as an option to recover only target firmware data to a state before it was updated in an additional data group including the target firmware data. In addition, in this specification, a full recovery option may be defined as an option to recover all of the pieces of firmware data in the additional data group including the target firmware data to initial firmware data.

If the recovery option is set to a partial recovery (i.e., 'YES' in operation S510), the storage device may perform partial recovery for an additional data group including the target firmware data in response to the rollback command in operation S520 corresponding to the partial recovery option.

If the recovery option is not set to a partial recovery (i.e., 'NO' in operation S510), the storage device to perform full recovery on the additional data group including the target firmware data in response to the rollback command in operation S530 corresponding to the full recovery option.

Meanwhile, in this specification, a recovery operation for an additional data group may be referred to as a rollback operation for the additional data group.

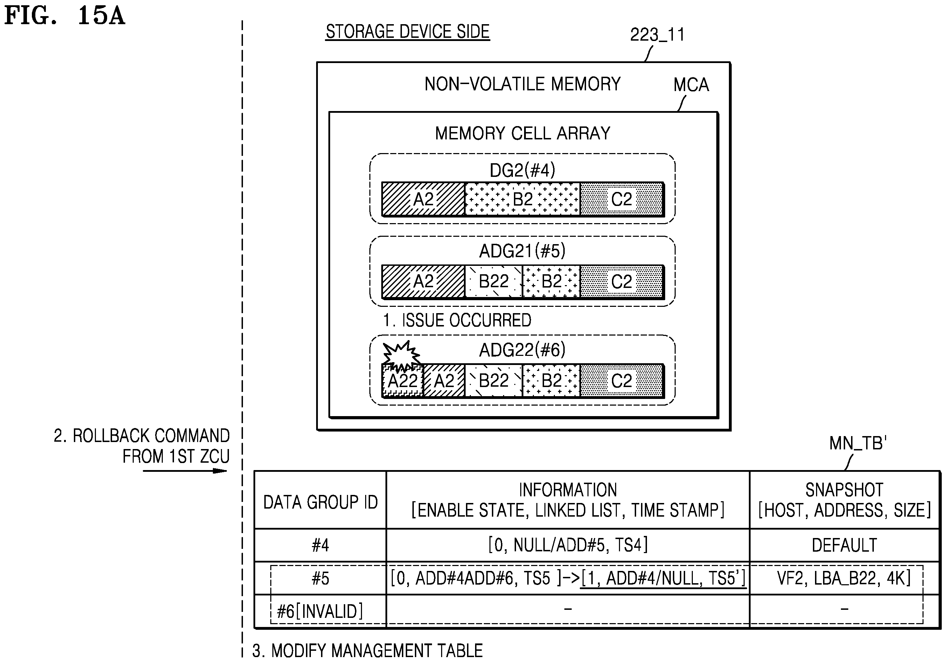

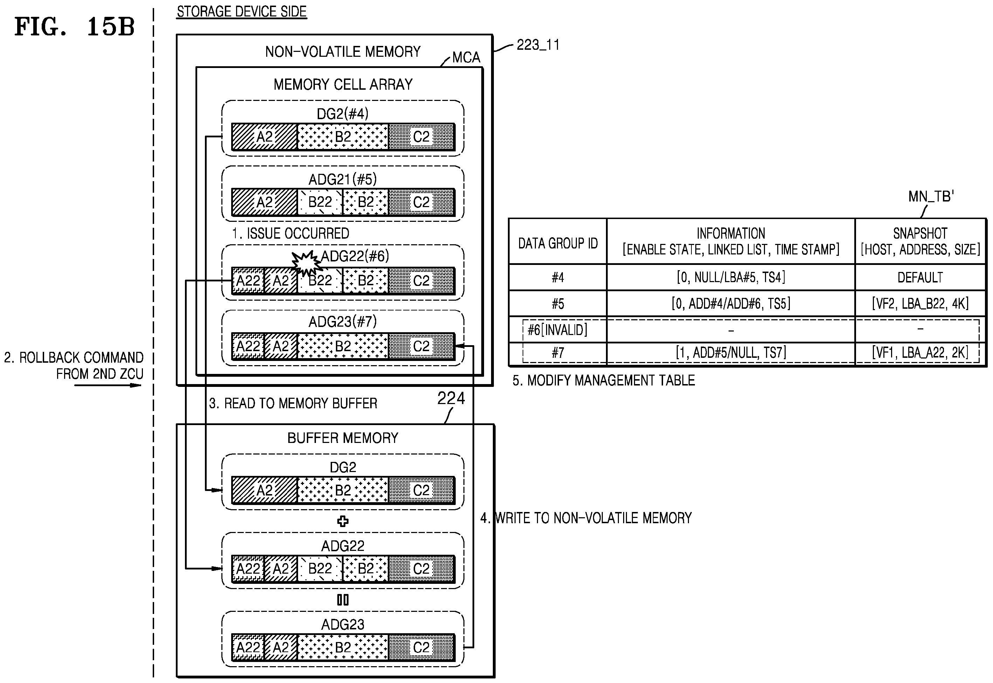

FIGS. 15A and 15B are diagrams illustrating a rollback operation of a storage device according to one or more embodiments. In FIGS. 15A and 15B, the contents described in FIG. 13A and the partial recovery option in FIG. 14 are set.

Referring to FIG. 15A, first, an issue in which an error occurs when executing the firmware data A2 to which the firmware update data A22 is applied in the first ZCU may occur in the fourth additional data group ADG22.

Second, the storage device may receive a rollback command for the firmware data A2 from the first ZCU.

Third, the storage device may modify the management table MN_TB' to activate the third additional data group ADG21, instead of the fourth additional data group ADG22, to be used by the first to third ZCUs. That is, the third additional data group ADG21 includes the firmware data A2 before being updated, and the storage device may check this through the management table MN TB', and the storage device may a rollback operation on the firmware data A2 corresponding to the first ZCU by modifying the management table MN TB' .

In detail, the storage device may mark the fourth additional data group ADG22 as invalid (INVALID) in the management ta ble MN_TB' and modify information corresponding to the third additional data group ADG21 to [1, ADD #4/NULL, TS5']. By modifying the first information of the third additional data group ADG21 from '0' to ` 1', the firmware data included in the third additional data group ADG21 may be provided to the first to third ZCUs. In some embodiments, a data group ID field of the management table MN_TB' may further include information indicating validity, and in this case, the storage device may mark the fourth additional data group ADG22 as INVALID using the corresponding information. In one or more embodiments, the fourth additional data group ADG22 marked as invalid may be deleted through an operation, such as garbage collection, or may be migrated to a certain memory and managed. Furthermore, information regarding the fourth additional data group ADG22 on the management table MN_TB' may be deleted.

Referring further to FIG. 15B, first, an issue in which an error occurs when executing the firmware data B2 to which the firmware update data B22 is applied in the second ZCU may occur in the fourth additional data group ADG22.

Second, the storage device may receive a rollback command for the firmware data B2 from the second ZCU.

Third, the storage device may read the second data group DG2 and the fourth additional data group ADG22 to the buffer memory 224. That is, the storage device may search the second data group DG2 including the firmware data B2 before being updated and may read the second data group DG2, together with the fourth additional data group ADG22 in which the issue occurs, to the buffer memory 224.

Fourth, the storage device may merge the second data group DG2 and the fourth additional data group ADG22 to generate a fifth additional data group ADG23. In detail, the storage device merges the firmware data B2 of the second data group DG2 to be overwritten by the updated firmware data B2 of the fourth additional data group ADG22 to generate the fifth additional data group ADG23.

Fifth, the storage device may modify the management table MN_TB' to indicate the newly generated fifth additional data group ADG23. In detail, the storage device may store #7 indicating the fifth additional data group ADG23 in the management table MN_TB', store, as first information, '1' indicating that the fifth additional data group ADG23 is currently used or available to be used by the first to third ZCUs in the management table MN_TB', store, as second information, ADD#5 (representative physical address corresponding to the third additional data group ADG22/NULL' indicating that an additional data group before the fifth additional data group ADG23 is the third additional data group ADG21 and there is no additional data group after the fifth additional data group ADG23 in the management table MN_TB', and store, as third information, TS7 which is a time point at which the fifth additional data group ADG23 is stored in the management table MN_TB'.

In addition, the storage device may mark the fourth additional data group ADG22 as invalid (INVALID) in the management table MN_TB'. As described above, the storage device may mark the fourth additional data group ADG22 as invalid (INVALID) using the data group ID field of the management table MN_TB', and the fourth additional data group ADG22 marked as invalid (INVALID) may be deleted or migrated to a certain memory. Furthermore, information regarding the fourth additional data group ADG22 on the management table MN_TB' may be deleted.

That is, the storage device may generate the fifth additional data group ADG23 including the firmware data B2 before being updated and perform a rollback operation on the firmware data B2 corresponding to the second ZCU by reflecting the fifth additional data group ADG23 in the management table MN_TB'.

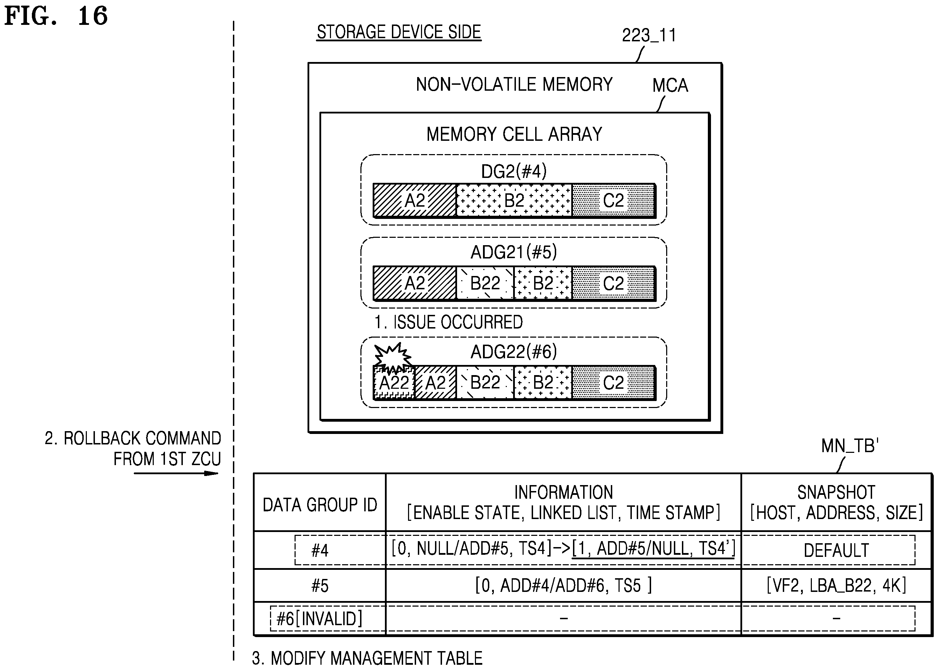

FIG. 16 is a diagram illustrating a rollback operation of a storage device according to one or more embodiments. It is assumed that FIGS. 15A and 15B are set with the description given above with reference to FIG. 13A and the full recovery option in FIG. 14.

Referring to FIG. 16, first, an issue may occur in the fourth additional data group ADG22, where an error arises when executing the firmware data A2 after applying the firmware update data A22 in the first ZCU.

Second, the storage device may receive a rollback command for the firmware data A2 from the first ZCU.

Third, the storage device may modify the management table MN_TB' to activate the second data group DG2, instead of the fourth additional data group ADG22, to be used by the first to third ZCUs. That is, the storage device may fully recover the fourth additional data group ADG22 to the second data group DG2 in response to the rollback command received from the first ZCU. The storage device may perform a rollback operation on the firmware data A2 to C2 corresponding to the first to third ZCUs by modifying the management table MN_TB'.

In detail, the storage device may mark the fourth additional data group ADG22 as invalid in the management table MN_TB' and modify information corresponding to the second data group DG2 as [1, ADD#5/NULL, TS4']. As first component of the second data group DG2 is modified from '0' to `1', the firmware data included in the second data group DG2 may be provided to the first to third ZCUs.

In addition, the storage device may mark the fourth additional data group ADG22 as invalid (INVALID) in the management table MN_TB'. As described above, the storage device may mark the fourth additional data group ADG22 as invalid (INVALID) using the data group ID field of the management table MN_TB', and the fourth additional data group ADG22 marked as invalid (INVALID) may be deleted or migrated to a certain memory. Furthermore, information regarding the fourth additional data group ADG22 on the management table MN_TB' may be deleted.

Meanwhile, the storage device may maintain the information corresponding to the third additional data group ADG21 as [0, ADD#4/ADD#6, TS5] or as [0, ADD#4/NULL, TS5].

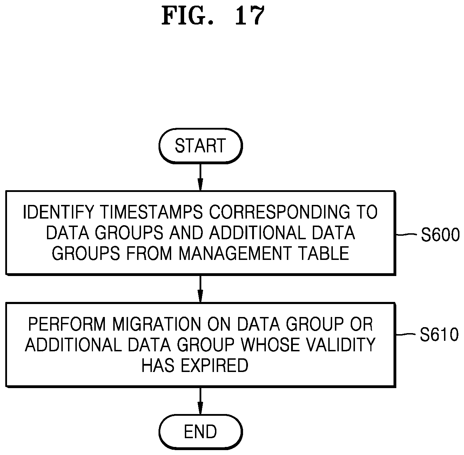

FIG. 17 is a flowchart illustrating an operating method related to migration of a storage device according to one or more embodiments.

Referring to FIG. 17, in operation S600, the storage device may identify timestamps corresponding to a plurality of data groups and a plurality of additional data groups from a management table. In detail, the storage device may identify third information in an information field of the management table to determine time points at which the data groups and the additional data groups are stored.

In operation S610, the storage device may perform a migration operation on a data group or an additional data group whose validity has expired. In one or more embodiments, the storage device may migrate the data group or the additional data group whose validity has expired to another memory region in order to improve the efficiency of the memory space occupied by the corresponding data group or additional data group. The storage device may perform a migration operation on the data group or the additional data group whose validity has expired based on one of a first migration policy and a second migration policy.

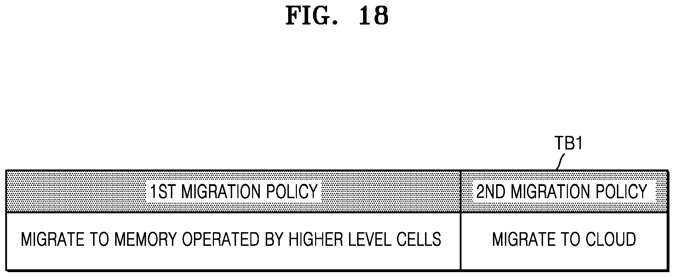

FIG. 18 is a diagram illustrating a migration policy according to one or more embodiments.

Referring to the first table TB1 of FIG. 18, the first migration policy based on the migration operation of FIG. 17 may be a policy of migrating the data group or the additional data group whose validity has expired to a memory operated with higher level cells than a previously stored memory. Higher-level cells may refer to types of memory cells in storage devices that store multiple bits of data per cell, such as triple-level cells (TLC) and quadruple-level cells (QLC), which store 3 bits and 4 bits per cell, respectively. Higher-level cells may offer higher data density compared to single-level cells (SLC) and multi-level cells (MLC), which store 1 bit and 2 bits per cell, respectively. The second migration policy may be a policy of migrating the data group or the additional data group whose validity has expired to a cloud provided by the autonomous driving server 2 and the network 3 in FIG. 1.

Under the first migration policy, a data group or an additional data group whose validity has not expired may be stored in a memory operated with a single-level cell in which 1-bit data is stored in one memory cell or with a multiple-level cell in which 2-bit data is stored in one memory cell, and a data group or an additional data group whose validity has expired may be migrated to a memory operated with a triple-level cell in which 3-bit data is stored in one memory cell or a quadruple-level cell in which 4-bit data is stored in one memory cell.

Under the second migration policy, the data group or the additional data group whose validity has not expired may be stored in the memory of the storage device, and the data group or the additional data group whose validity has expired may be migrated to the cloud implemented with the autonomous driving server 2 and the network 3 in FIG. 1.

In addition, in one or more embodiments, a plurality of pieces of information corresponding to the additional data group marked as invalid as illustrated in FIG. 15A, etc. may be deleted or migrated to a certain memory during a migration operation based on the first migration policy or the second migration policy.

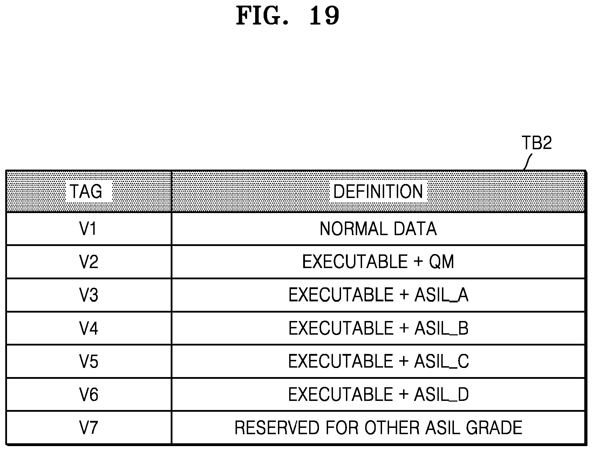

FIG. 19 is a diagram illustrating a tag including information indicating an ASIL grade according to one or more embodiments.

Referring to a second table TB2 of FIG. 19, tags may include information indicating whether firmware data is executable firmware-related code and information indicating an ASIL grade assigned to the firmware data. For example, a tag value V1 may indicate normal data, a tag value V2 may indicate executable firmware-related code and quality-managed (QM) level, a tag value V3 may indicate executable firmware-related code and ASIL_A level, a tag value V4 may indicate executable firmware-related code and ASIL_B level, a tag value V5 may indicate executable firmware-related code and ASIL_C level, a tag value V6 may indicate executable firmware-related code and ASIL_D level, and a tag value V7 may remain to indicate other ASIL grades.

However, the second table TB2 is only one or more embodiments and may indicate whether firmware data is firmware-related code executable in various manners and the ASIL grades of the firmware data through tags.

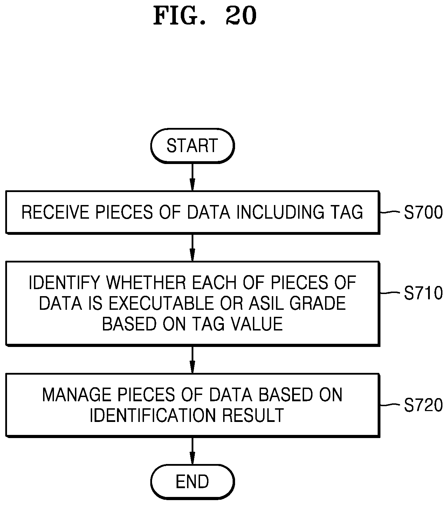

FIG. 20 is a diagram illustrating an operating method further considering an ASIL grade of a storage device according to one or more embodiments.

Referring to FIG. 20, in operation S700, the storage device may receive a plurality of pieces of data including a tag.

In operation S710, the storage device may determine whether each of the pieces of data is executable or an ASIL grade thereof based on a value of the tag.

In operation S720, the storage device may manage the pieces of received data based on a determination result of operation S710.

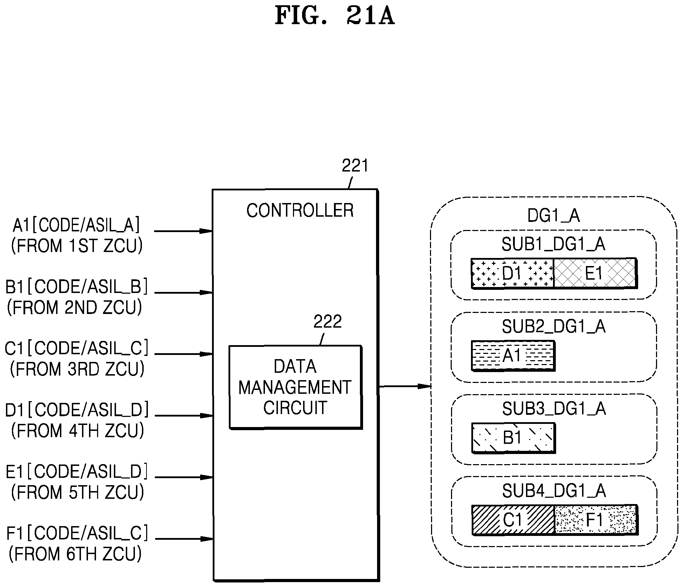

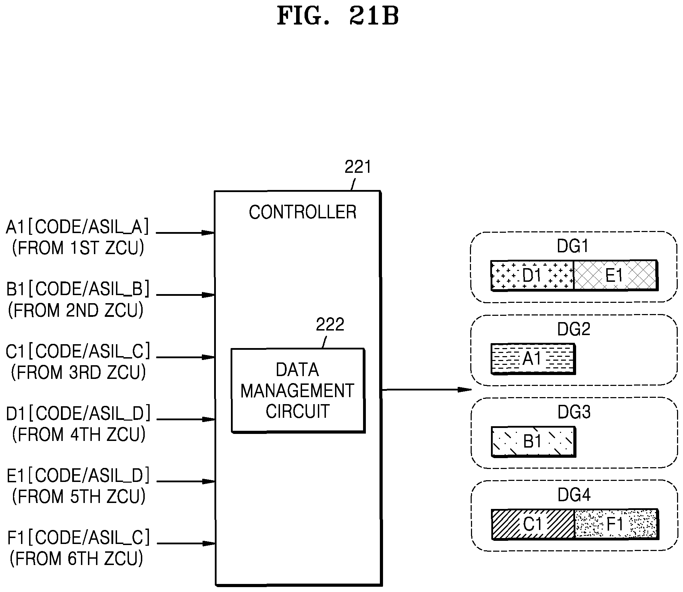

FIGS. 21A and 21B are diagrams illustrating an operating method of a storage device that manages data based on the tags of FIG. 19. In FIGS. 21A and 21B, it is assumed that a data group unit is set to include a plurality of pieces of firmware data corresponding to the first to sixth ZCUs.

Referring to FIG. 21A, the controller 221 may receive firmware data A1 including executable firmware-related code and a tag indicating an ASILA grade from the first ZCU, receive firmware data B1 including executable firmware-related code and a tag indicating an ASIL_B grade from the second ZCU, receive firmware data C1 including executable firmware-related code and a tag indicating an ASIL_C grade from the third ZCU, receive firmware data D1 including executable firmware-related code and a tag indicating an ASIL_D grade from the fourth ZCU, receive firmware data E1 including executable firmware-related code and a tag indicating the ASIL_D grade from the fifth ZCU, and receive firmware data F1 including executable firmware-related code and a tag indicating the ASIL_C grade from the sixth ZCU.

In one or more embodiments, the data management circuit 222 may generate a data group DG1_A based on the tags of firmware data A1 to F1. The data group DG1_A may include first to fourth sub-data groups SUB1_DG1_A, SUB2_DG1_A, SUB3_DG1_A, and SUB4_DG1_A. The first sub-data group SUB1_DG1_A may include the firmware data D 1 and firmware data E1 with the ASIL_D grade, the second sub-data group SUB2_DG1_A may include the firmware data A1 with the ASIL_A grade, the third sub-data group SUB3_DG1_A may include the firmware data B1 with the ASIL_B grade, and the fourth sub-data group SUB4_DG1_A may include the firmware data C1 and the firmware data F1 with the ASIL_C grade.

In this manner, the data management circuit 222 may generate a data group including sub-data groups including firmware data with the same ASIL grade based on the tags. In one or more embodiments, the data management circuit 222 may store a sub-data group with a relatively high ASIL grade of importance in a highly reliable memory (for example, a memory operated with a single level cell), and store a sub-data group with a relatively low ASIL grade of importance in unreliable memory (e.g., memory operated with quadruple level cells). In some embodiments, the data management circuit 222 may add the aforementioned signature information for integrity verification only to the sub-data group with a relatively high ASIL grade of importance and manage the same.

Referring further to FIG. 21B, unlike FIG. 21A, the data management circuit 222 may generate first to fourth data groups DG1, DG2, DG3, and DG4 based on the tags of the firmware data A1 to F1. The first data group DG1 may include the firmware data D1 and the firmware data E1 with the ASIL_D grade, the second data group DG2 may include the firmware data A1 with the ASIL_A grade, the third data group DG3 may include the firmware data B1 with the ASIL_B grade, and the fourth data group DG4 may include the firmware data C1 and the firmware data F1 with the ASIL_C grade.

In this manner, the data management circuit 222 may generate data groups including firmware data with the same ASIL grade based on the tags. In one or more embodiments, the data management circuit 222 may store a data group with a relatively high ASIL grade of importance in a highly reliable memory (e.g., a memory operated with a single level cell) and store a data group with a relatively low ASIL grade of importance in an unreliable memory (e.g., a memory operated with a quadruple level cell). In some embodiments, the data management circuit 222 may add and manage the signature information for integrity verification described above only to data groups (DG1-DG3) with a relatively high ASIL grade of importance.

## Claims

1. A storage device (120, 220) comprising:
a memory device (223) comprising a memory cell array (MCA); and
a memory controller (121, 221) configured to:
receive (S100) a plurality of pieces of firmware data (A1, B1, C1) from a plurality of zonal control units, ZCUs;
classify (S110) plurality of pieces of firmware data (A1, B1, C1) into a plurality of data groups (DG1) based on tags indicating whether the plurality of pieces of firmware data (A1, B1, C1) are executable firmware-related codes; and
store (S120) the plurality of data groups (DG1) in the memory cell array (MCA).

2. The storage device (120, 220) of claim 1, wherein one of the plurality of data groups (DG1) comprises at least two pieces of firmware data (A1, B1) corresponding to different ZCUs (110, 211-213) among the plurality of ZCUs (110, 211-213).

3. The storage device (120, 220) of claim 1 or 2, wherein each of the plurality of data groups (DG1) has a same data size.

4. The storage device (120, 220) of claim 1 or 2, wherein at least two of the plurality of data groups (DG1) have different data sizes.

5. The storage device (120, 220) of any one of claims 1 to 4, wherein one of the plurality of data groups (DG1) comprises at least two pieces of firmware data (A1, B1) corresponding to one of the plurality of ZCUs (110, 211-213).

6. The storage device (120, 220) of any one of claims 1 to 5, wherein one of the plurality of data groups (DG1) comprises signature information (SIG_1) used for integrity verification.

7. The storage device (120, 220) of any one of claims 1 to 6, wherein
the memory controller (121, 221) is further configured to identify a plurality of pieces of normal data received from the plurality of ZCUs (110, 211-213), based on tags respectively included in the plurality of pieces of normal data, and store the plurality of pieces of normal data in the memory cell array (MCA).

8. The storage device (120, 220) of any one of claims 1 to 7, wherein
the memory cell array (MCA) comprises
a plurality of memory blocks (BLK1-BLK3), and
one of the plurality of data groups (DG1) is stored in a memory region comprising pages of the plurality of memory blocks (BLK1-BLK3).

9. The storage device (120, 220) of any one of claims 1 to 8, wherein
the memory controller (121, 221) is further configured to identify a plurality of pieces of firmware update data (A12) received from an over-the-air, OTA, management circuit, by tags respectively indicating whether the plurality of pieces of firmware update data (A12) are executable firmware-related codes respectively included in the plurality of pieces of firmware update data (A12), generate a plurality of additional data groups (ADG11) based on the plurality of data groups (DG1) and the plurality of pieces of firmware update data (A12), and store the plurality of generated additional data groups (ADG11) in the memory cell array (MCA).

10. The storage device (120, 220) of claim 9, wherein
the memory controller (121, 221) is further configured to manage the plurality of data groups (DG1) and the plurality of additional data groups (ADG11) based on a management table (MN_TB ) including a data group ID field indicating a certain data group or a certain additional data group.

11. The storage device (120, 220) of claim 10, wherein the management table (MN_TB ) further comprises an information field comprising:
an enable state indicating whether the certain data group or the certain additional data group is currently used or available to be used by at least one of the plurality of ZCUs (110, 211-213);
a linked list; and
a timestamp indicating a time point at which the certain data group or the certain additional data group is stored.

12. The storage device (120, 220) of claim 10 or 11, wherein the memory controller (121, 221) is configured to perform a rollback operation based on data groups (DG1) and additional data groups (ADG11) corresponding to a first ZCU (211), among the plurality of data groups (DG1) and the plurality of additional data groups (ADG1 1), and the management table (MN_TB ), in response to a rollback command received from the first ZCU (211) among the plurality of ZCUs (110, 211-213).

13. The storage device (120, 220) of claim 12, wherein the memory controller (121, 221) is further configured to modify enable states of at least two of the data groups (DG1) and additional data groups (ADG11) corresponding to the first ZCU (211) in the management table (MN_TB ), through the rollback operation.

14. The storage device (120, 220) of claim 12 or 13, wherein the memory controller (121, 221) is further configured to modify the management table (MN_TB ) to indicate that a new additional data group generated based on at least two of the data groups (DG1) and additional data groups (ADG11) corresponding to the first ZCU (211) is currently used or available to be used by the first ZCU (211), through the rollback operation.

15. A storage device (120, 220) comprising:
a memory device (223) configured to store a data group (DG1) comprising a plurality of pieces of firmware data (A1, B1, C1) corresponding to a plurality of zonal control units, ZCUs (110, 211-213), and a plurality of additional data groups (ADG11) generated by applying a plurality of pieces of firmware update data (A12) corresponding to the plurality of ZCUs (110, 211-213) to the data group (DG1); and
a memory controller (121, 221) configured to manage the data group (DG1) and the plurality of additional data groups (ADG11), and perform a rollback operation based on the data group (DG1) and the plurality of additional data groups (ADG11) in response to a rollback command for target firmware data (A1) received from at least one of the plurality of ZCUs (110, 211-213).
